# EUROPEAN PATENT SPECIFICATION

(11) **EP 4 128 592 B1**
(45) Date of publication and mention of the grant of the patent: **10.09.2025**
(21) Application number: 20929551.8
(22) Date of filing: 02.04.2020
(51) Int. Cl.: H04L 67/5681, H04W 4/02, H04W 4/021, H04W 4/029, H04W 16/00, H04W 24/04, H04W 48/16, H04W 64/00, G01C 21/34, G01C 21/36, G06N 3/08, G06N 20/00

(54) **PRELOADING APPLICATION DATA BASED ON NETWORK STATUS PREDICTION AND DATA ACCESS BEHAVIOR PREDICTION**
VORLADEN VON ANWENDUNGSDATEN BASIEREND AUF DER VORHERSAGE DES NETZSTATUS UND DES DATENZUGRIFFSVERHALTENS
PRÉCHARGEMENT DE DONNÉES D'APPLICATION SUR LA BASE D'UNE PRÉDICTION D'ÉTAT DE RÉSEAU ET D'UNE PRÉDICTION DE COMPORTEMENT D'ACCÈS AUX DONNÉES

(43) Date of publication of application: 08.02.2023
(73) Proprietor: QUALCOMM INCORPORATED, San Diego, California 92121-1714 (US)
(72) Inventor: PAN, Qimeng, San Diego, California 92121-1714 (US); DONG, Xiaoxia, San Diego, California 92121-1714 (US); WEI, Jun, San Diego, California 92121-1714 (US)
(74) Representative: Reddie & Grose LLP
(86) International application number: PCT/CN2020/082934
(87) International publication number: WO 2021/196117

(56) References cited:
- AU-A4- 2015 100 235
- CN-A- 103 428 334
- CN-A- 105 227 588
- CN-A- 106 507 310
- US-A1- 2013 159 552
- US-A1- 2015 312 301
- US-A1- 2015 312 301
- US-A1- 2016 248 704
- US-A1- 2017 006 431
- US-A1- 2017 086 163
- US-A1- 2017 279 914
- US-A1- 2019 392 054

## Description

### BACKGROUND

Wireless network coverage across regions can vary depending on region topology and available wireless communications network carrier infrastructure. Other sources of interference, such as manmade structures and inclement weather, can influence network stability to cause a user to experience inadequate data reception when accessing online data. When a wireless device connected to a wireless communications network enters into an area with unstable or no network coverage, online data transfer to the mobile device can be limited, or halted altogether, causing degradation or interruption of a user experience. Applications on mobile devices that request data over a wireless network can experience latency issues, or stop functioning, when the wireless device implementing the application enters into an unstable network area. These applications may begin functioning again when exiting an unstable network area and entering a stable network area. However, the user has no way to prevent the limited or loss of use of such applications when experiencing unstable network coverage for a period of time. Loss of data coverage can be especially problematic when an application requiring mobile data is being used to navigate an ongoing journey.

AU 2015 100 235 A4 describes a map application with improved navigation tools.

US 2019/392054 A1 describes systems and methods of pre-fetching map data.

US 2017/006431 A1 discloses a method in which pre-loading of data is performed based on a predicted capacity of the network.

### SUMMARY

Various aspects include methods, systems, and devices implementing the methods for preloading application data to a wireless device based on predicted network status coverage and predicted online data access behaviors of a user. Various aspects may include receiving, from the wireless device, trip information including a first trip location and a second trip location, receiving network coverage map information representing a first network coverage area and a second network coverage area, wherein the second trip location is located within the first network coverage area, predicting a travel time for the wireless device to reach the second network coverage area from the second trip location, predicting a travel duration that the wireless device is anticipated to travel within the second network coverage area, and transmitting, to the wireless device, a notification including the predicted travel time and the predicted travel duration configured to enable the wireless device to determine a preload data amount or a preload data type or types.

In some aspects, the first network coverage area may have a first network stability level associated with a first wireless network type and a first signal strength, the second network coverage area may have a second network stability level associated with a second wireless network type and a second signal strength, and the preload data amount or preload data type or types may be based at least in part on the first network stability level and the second network stability level. In some aspects, the network coverage map information may include carrier provided information including base station distribution, in which the first network stability level and the second network stability level may be based in part on the base station distribution.

In some aspects, the network coverage map information may include transition coordinates received from a plurality of wireless devices, the transition coordinates may correspond to a transition between the first network coverage area and the second network coverage area, and the predicted travel time may be based at least in part on the transition coordinates. In some aspects, preload data types may include high quality video, standard quality video, low quality video, audio, messaging, or text.

Some aspects may further include determining a speed of the wireless device based on the first trip location and the second trip location, in which predicting the travel time and predicting the travel duration may be based at least in part on the speed of the wireless device.

In some aspects, the trip information may further include a travel route between the first trip location and a trip end location, in which predicting the travel time and predicting the travel duration may be based at least in part on the travel route.

Some aspects may further include receiving, from the wireless device, a request for preloading data, and transmitting the requested preloading data to the wireless device before the wireless device enters the second network coverage area.

Some aspects may further include receiving, from the wireless device, online access history of a user of the wireless device, training a user behavior model based on the online access history that will enable the wireless device to determine the preload data amount and/or preload data type or types wherein the user behavior model outputs a probability that the user will access the preload data amount and/or the preload type or data types, and transmitting the user behavior model to the wireless device.

Various aspects may include transmitting, to a server, trip information including a first trip location and a second trip location, receiving, from the server, a notification including a predicted travel time and a predicted travel duration based on the first trip location and the second trip location, and determining a preload data amount and/or preload data type or types in response to receiving the notification.

Some aspects may further include transmitting, to the server, a request for preloading data in response to the wireless device determining the preload data amount and/or the preload data type or types, and receiving, from the server, the requested preloading data before the wireless device enters a network coverage area having an unstable network connection.

Some aspects may further include transmitting, to the server, online access history of a user of the wireless device, receiving, from the server, a user behavior model, using the user behavior model to determine a probability that the user will access the preload data amount and/or the preload data type or types, and determining the preload data amount and/or the preload data type or types based on the probability that the user will access the preload data amount and/or the preload data type or types output by the user behavior model.

In some aspects, determining the preload data amount and/or the preload data type or types may be based at least in part on the predicted travel time and the predicted travel duration. In some aspects, the notification may include a network stability level of an upcoming network coverage area. In some aspects, determining the preload data amount and/or the preload data type or types may be based at least in part on the network stability level.

Further aspects include a wireless device including a processor configured to perform operations of any of the methods summarized above. Further aspects include a server including a processor configured to perform operations of any of the methods summarized above. Further aspects include a processing device configured for use in a wireless device and configured to perform operations of any of the methods summarized above. Further aspects include a wireless device including a non-transitory processor-readable medium having stored thereon processor-executable instructions configured to cause a processor of a wireless device or a server to perform operations of any of the methods summarized above. Further aspects include a wireless device including means for performing operations of any of the methods summarized above. Further aspects include a server including means for performing operations of any of the methods summarized above.

### BRIEF DESCRIPTION OF THE DRAWINGS

The accompanying drawings, which are incorporated herein and constitute part of this specification, illustrate exemplary embodiments, and together with the general description given above and the detailed description given below, serve to explain the features of the various embodiments.
FIG. 1 is a system block diagram illustrating an example communications system 100 according to various embodiments.
FIG. 2 is a component block diagram illustrating an example computing system suitable of implementing various embodiments.
FIG. 3 is a component block diagram of an example of a software architecture 300 including a radio protocol stack for the user and control planes in wireless communications suitable of implementing various embodiments.
FIG. 4 is a component block diagram illustrating an example system 400 configured to preload wireless data within a wireless communication network based on predicted network status and predicted user behavior according to various embodiments.
FIG. 5 is a component block diagram illustrating an example system 500 configured to preload wireless data within a wireless communication network based on predicted network status and predicted user behavior according to various embodiments.
FIG. 6 is a chart illustrating available content per network stability level within a wireless communications network according to various embodiments.
FIG. 7 is a message flow diagram 700 illustrating operations and communications within a wireless communication network for implementing various embodiments.
FIG. 8A is a process flow diagram illustrating a method 800 for developing a network coverage database according to various embodiments.
FIG. 8B is a chart illustrating storage of network coverage information within a network coverage database 800b according to various embodiments.
FIG. 9A illustrates a wireless communications network 900a exhibiting various network stability levels according to various embodiments.
FIG. 9B is a table illustrating an example network stability database for the wireless communications network 900a according to various embodiments.
FIG. 10A illustrates a wireless communications network 1000a exhibiting various network stability levels according to various embodiments.
FIG. 10B is a table illustrating an example network stability database for the wireless communications network 1000a according to various embodiments.
FIG. 11 is a process flow diagram illustrating a method 1100 for predicting a travel time to a network coverage area and a travel duration through the network coverage area according to various embodiments.
FIG. 12 is a process flow diagram illustrating a method 1200 for preloading data onto a wireless device according to various embodiments.
FIG. 13 is a process flow diagram illustrating a method 1300 for preloading data onto a wireless device based on predicted network status coverage according to various embodiments.
FIG. 14 is a process flow diagram illustrating an embodiment method for preloading wireless data based on a predicted network status coverage according to various embodiments.
FIG. 15 is a component block diagram of an example of a network computing device for implementing various embodiments.
FIG. 16 is a component block diagram of an example wireless device suitable for implementing various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and embodiments are for illustrative purposes and are not intended to limit the scope of the various embodiments or the claims.

Various embodiments include methods that may be implemented within one or more computing devices, such as a network server and/or a mobile device, for preloading mobile data to a wireless device based on predicting when the wireless device will transition between areas having different network stability levels, and based on predicted data access behaviors of a user. Various embodiments may include a computing device predicting for some period (e.g., seconds, minutes, etc.) in future, the position of the wireless device and determining network stability (or instability) or base station transmission capabilities, in the vicinity of the prediction location, as well as the type, amount, and/or rate of data that a mobile device is likely to request at that location and/or future time. Network stability level predictions and data usage predictions may be used to determine data types and/or data quantities to preload to a wireless device prior to experiencing an anticipated network issue (i.e. reduced or no wireless connectivity). Based on these predictions, appropriate preloading of application data may be initiated.

In some embodiments, a network server may determine the data types and/or data quantities to preload to a wireless device and indicate to the wireless device when, the amount and/or the type of data to be pre-loaded, and the wireless device may request downloading of such data in response. In some embodiments, the wireless device may receive network information (e.g., network stability and base station capabilities) and/or data usage predictions from a network server, determine the amount and/or the type of data to be pre-loaded based on the received information, and request downloading of such data in response. In some embodiments, a network server may determine the data types and/or data quantities to preload to a wireless device and begin transmitting the preload data to the wireless device.

In some embodiments, a network server may predict future network stability or instability characteristics for a wireless device based on network coverage characteristics gathered by mobile devices throughout a wireless communications network. By gathering link quality, quality of service (QOS), and similar information linked to location information from mobile devices, the wireless communications network may develop and update a database of network stability/instability mapped to locations (e.g., signal strength mapped to coordinates or boundaries of a geographic location or area).

In some embodiments, predictions of the data types and/or data quantities that a wireless device (particularly a user of the wireless device) may request at a future time and/or location may be determined by a network data access behavior prediction model and/or a user behavior prediction model that may execute in a network server, in the wireless device, or partly in both the network serve and the wireless device. A network data access behavior prediction model and/or a user behavior prediction model may be in the form of a neural network that is trained on the data access behavior of the wireless device over a period of time. Artificial intelligence, or machine learning including recurrent neural networks and long-short term memory (LSTM), may be trained based on histories of the online data accesses by the mobile device of an individual user to produce a behavior prediction model that may predict user-specific online-data-usage characteristics, behaviors, data types, data amounts, etc. For example, a network data access behavior prediction model that may execute in a network server and/or a wireless device may be trained to predict the data access behavior of a particular wireless device along a particular travel path by collecting information regarding the data usage of that wireless device along the travel path over a period of time and using the collected information as a training data set for training a behavior prediction model. The network data access behavior prediction model may also predict a likely travel path of a user, such as a routine commute, based on observations of the paths traveled by the wireless devices on a regular basis.

A trained network data access behavior prediction model executing in a network server and/or a wireless device may receive as inputs a recent wireless device data access history, most recently accessed or used data of the mobile device (e.g., applications, websites, geolocation services, operating system, etc.), and data presently being accessed by the mobile device (e.g., an application, website, or any other mobile application requesting data from a wireless network to perform any level of functionality). The trained network data access behavior prediction model uses the inputs to predict data access characteristics and activities (i.e., data download requests) of the wireless device a period of time in the future and/or along a predicted or anticipated travel path. The predicted data characteristics may be data download rates, data type usage such as application types for video streaming, website, or geolocation services, download intervals, and other user-specific, data-specific characteristics.

In some embodiments, the trained network data access behavior prediction model may be implemented in a user behavior prediction module executing on a wireless device. In some embodiments, a communication network server may perform operations of training the network data access behavior prediction model and/or user behavior prediction module based on observations of data access actions, travel patterns, etc. of the wireless device, and download the trained network data access behavior prediction model and/or user behavior prediction module to the wireless device for execution.

In some embodiments, a wireless communications network server (e.g., a server executing the network status prediction module) may predict the time, duration, and/or location of when and where a wireless device will experience unstable network communications, such as when the wireless device will enter and leave an area of unstable network coverage. The server may apply network knowledge of unstable network coverage areas to a travel path predicted for a wireless device. By receiving or predicting (e.g., trip information entered by a user, or based on the user behavior prediction model) the travel path and projected speed, the server may predict when the wireless device will begin to experience unstable network coverage, the type or amount of degradation in signal quality, and when the device will again experience stable network coverage. For example, if the server learns that the wireless device is traveling along a given freeway at 60 miles per hour (mph) (e.g., from geopositioning information, cell tracking, the behavior model, mobile device hardware and sensors, etc.), the module may plot that projected travel path against a map of network characteristics (e.g., network areas having various network stability levels) to predict when the wireless device may enter and leave known unstable network coverage areas.

In some embodiments, a wireless device (e.g., executing a data preload module) may receive from a network server predictions of when and where a wireless device will experience unstable network conditions, and provide the received information as inputs to the user behavior prediction model, which may determine the type and amount of data that should be requested for preloading to the wireless device. The wireless device may utilize network status predictions and user behavior predictions to determine when, what type, and how much data to preload so that a user is less likely to experience interruptions in the user online experience or other issues with wireless communications network services. The time, duration, and location predictions determined by the server may be used by the wireless device in conjunction with the user behavior prediction output to send requests to the network for the preloading of data to the wireless device.

For example, a wireless device may be accessing streaming video data in a fully stable network coverage area in a continuous manner, such that a portion of the video is loaded and a portion remains unloaded until requested by the wireless device. The wireless device may request preloading (i.e. transmission of data in advance of usage) of video data for and corresponding to the anticipated time and duration of unstable network coverage. As another example, if the server predicts that the user typically accesses a mapping application in an area of unstable network conditions, the wireless device may request preloading of digital map data for the area before the wireless device encounters the unstable network conditions.

In some embodiments, wireless devices and/or network servers may execute user behavior prediction modules, network status prediction modules, and data preload modules as described herein individually (e.g., as standalone functionality) or as part of a system. For example, the various modules described herein may be implemented in the wireless device (e.g., based on information received from the wireless device), in one or more servers in the communication network (e.g., providing outputs or recommendations to the wireless device), or partly in the wireless device and partly in one or more servers in the network. For example, a user behavior model may be trained on the wireless device, or on the server, and a user behavior prediction module may be implemented on the wireless device, on the server, or on both the wireless device and the server. Further, regardless of where the functionality of various embodiments is implemented, information may be provided and used by both the wireless device and the network server, and outputs or actions resulting from preload decisions may involve both the wireless device and the network server.

Various embodiments provide the advantage of making available in memory of the wireless device data that is likely to be accessed during times when downloading such data from the network may be slow or not possible. Further advantages include limiting or preventing the download of data that is unlikely to be accessed during such instances of limited or no wireless network connectivity, thus preventing or limiting the waste of computational resources of both the wireless devices and wireless communications network Various embodiments may improve the user mobile online experience by predicting user network usage behavior and the network availability, status, and QOS along a travel route. Various embodiments may improve the user experience by preloading data in anticipation of encountering unstable or no network conditions that could lead to lower bandwidth and download rates, higher error rates, loss of connection, and other network factors that contribute to poor user experiences on mobile communication devices.

The term "wireless device" is used herein to refer to any one or all of cellular telephones, smartphones, portable computing devices, personal or mobile multi-media players, autonomous vehicles, unmanned aerial vehicles (UAV), wireless communication elements within autonomous and semiautonomous vehicles, wireless devices affixed to or incorporated into various mobile platforms, global positioning system devices, vehicle computing devices, infotainment systems in vehicles, autonomous vehicle control systems, laptop computers, tablet computers, smartbooks, ultrabooks, palmtop computers, wireless electronic mail receivers, multimedia Internet-enabled cellular telephones, medical devices and equipment, biometric sensors/devices, wireless router devices, wireless appliances, wearable devices including smart watches, and entertainment devices (such as wireless gaming controllers, music and video players, satellite radios, etc.), , and similar electronic devices that include a memory, wireless communication components and a programmable processor.

The term "system-on-a-chip" (SOC) is used herein to refer to a single integrated circuit (IC) chip that contains multiple resources or processors integrated on a single substrate. A single SOC may contain circuitry for digital, analog, mixed-signal, and radiofrequency functions. A single SOC also may include any number of general purpose or specialized processors (digital signal processors, modem processors, video processors, etc.), memory blocks (such as ROM, RAM, Flash, etc.), and resources (such as timers, voltage regulators, oscillators, etc.). SOCs also may include software for controlling the integrated resources and processors, as well as for controlling peripheral devices.

The term "system-in-a-package" (SIP) may be used herein to refer to a single module or package that contains multiple resources, computational units, cores or processors on two or more IC chips, substrates, or SOCs. For example, a SIP may include a single substrate on which multiple IC chips or semiconductor dies are stacked in a vertical configuration. Similarly, the SIP may include one or more multi-chip modules (MCMs) on which multiple ICs or semiconductor dies are packaged into a unifying substrate. A SIP also may include multiple independent SOCs coupled together via high speed communication circuitry and packaged in close proximity, such as on a single motherboard or in a single wireless device. The proximity of the SOCs facilitates high speed communications and the sharing of memory and resources.

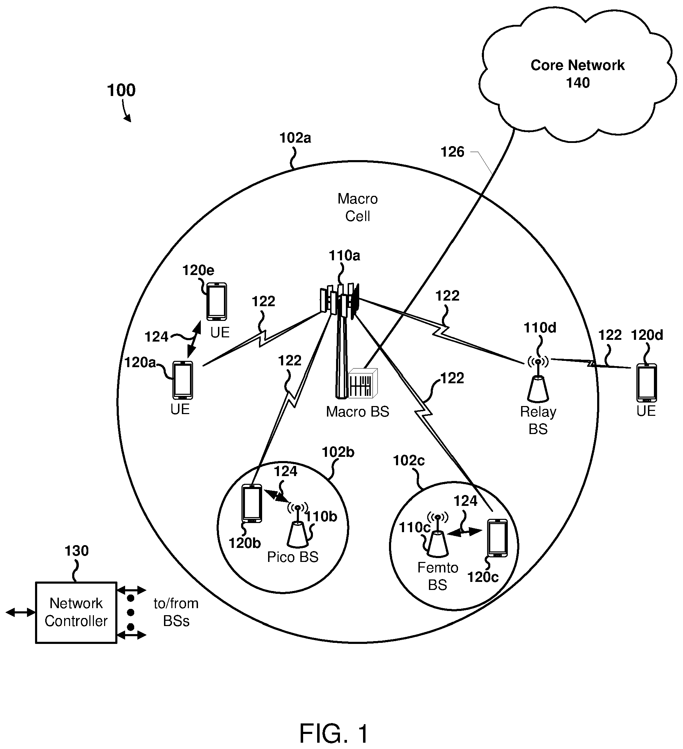

FIG. 1 is a system block diagram illustrating an example communications system 100 suitable for implementing various embodiments. The communications system 100 may be an 5G New Radio (NR) network, or any other suitable network such as (but not limited to) an LTE network.

The communications system 100 may include a heterogeneous network architecture that includes a core network 140 and a variety of wireless devices (illustrated as wireless device 120a-120e in FIG. 1). The communications system 100 also may include a number of base stations (illustrated as the BS 110a, the BS 110b, the BS 110c, and the BS 110d) and other network entities. A base station is an entity that communicates with wireless devices, and also may be referred to as an NodeB, a Node B, an LTE evolved nodeB (eNB), an access point (AP), a radio head, a transmit receive point (TRP), a New Radio base station (NR BS), a 5G NodeB (NB), a Next Generation NodeB (gNB), or the like. Each base station may provide communication coverage for a particular geographic area. In 3GPP, the term "cell" can refer to a coverage area of a base station, a base station subsystem serving this coverage area, or a combination thereof, depending on the context in which the term is used.

A base station 110a-110d may provide communication coverage for a macro cell, a pico cell, a femto cell, another type of cell, or a combination thereof. A macro cell may cover a relatively large geographic area (for example, several kilometers in radius) and may allow unrestricted access by wireless devices with service subscription. A pico cell may cover a relatively small geographic area and may allow unrestricted access by wireless devices with service subscription. A femto cell may cover a relatively small geographic area (for example, a home) and may allow restricted access by wireless devices having association with the femto cell (for example, wireless devices in a closed subscriber group (CSG)). A base station for a macro cell may be referred to as a macro BS. A base station for a pico cell may be referred to as a pico BS. A base station for a femto cell may be referred to as a femto BS or a home BS. In the example illustrated in FIG. 1, the base station 110a may be a macro BS for a macro cell 102a, the base station 110b may be a pico BS for a pico cell 102b, and the base station 110c may be a femto BS for a femto cell 102c. One or more of the base stations 110a-110d may support one or multiple (for example, three) cells The terms "eNB," "base station," "NR BS," "gNB," "TRP," "AP," "node B," "5G NB," and "cell" may be used interchangeably herein.

A cell may not be stationary, and the geographic area of the cell may move according to the location of a mobile base station. The base stations 110a-1 10d may be interconnected to one another as well as to one or more other base stations or network nodes (not illustrated) in the communications system 100 through various types of backhaul interfaces, such as a direct physical connection, a virtual network, or a combination thereof using any suitable transport network

The base station 110a-110d may communicate with the core network 140 over a wired or wireless communication link 126. The wireless device 120a-120e may communicate with the base station 110a-110d over a wireless communication link 122.

The wired communication link 126 may use a variety of wired networks (such as Ethernet, TV cable, telephony, fiber optic and other forms of physical network connections) that may use one or more wired communication protocols, such as Ethernet, Point-To-Point protocol, High-Level Data Link Control (HDLC), Advanced Data Communication Control Protocol (ADCCP), and Transmission Control Protocol/Internet Protocol (TCP/IP).

The communications system 100 also may include relay stations (such as relay BS 110d). A relay station is an entity that can receive a transmission of data from an upstream station (for example, a base station or a wireless device) and send a transmission of the data to a downstream station (for example, a wireless device or a base station). A relay station also may be a wireless device that can relay transmissions for other wireless devices. In the example illustrated in FIG. 1, the relay base station 110d may communicate with the macro base station 110a and the wireless device 120d in order to facilitate communication between the base station 110a and the wireless device 120d. A relay station also may be referred to as a relay base station, a relay base station, a relay, etc.

The communications system 100 may be a heterogeneous network that includes base stations of different types, for example, macro base stations, pico base stations, femto base stations, relay base stations, etc. These different types of base stations may have different transmit power levels, different coverage areas, and different impacts on interference in communications system 100. For example, macro base stations may have a high transmit power level (for example, 5 to 40 Watts) whereas pico base stations, femto base stations, and relay base stations may have lower transmit power levels (for example, 0.1 to 2 Watts).

A network controller 130 may couple to a set of base stations (e.g., one or more of the base stations 110a-10d) and may provide coordination and control for these base stations. The network controller 130 may communicate with the base stations via a backhaul (not shown). The base stations 110a-110d also may communicate with one another, for example, directly or indirectly via a wireless or wireline backhaul.

The wireless devices 120a, 120b, 120c may be dispersed throughout communications system 100, and each wireless device may be stationary or mobile. A wireless device also may be referred to as an access terminal, a terminal, a mobile station, a subscriber unit, a station, etc.

The macro base station 110a may communicate with the communication network 140 over a wired or wireless communication link 126. The wireless devices 120a, 120b, 120c may communicate with one or more of the base stations 110a-110d over a wireless communication link 122.

The wireless communication links 122, 124 may include a plurality of carrier signals, frequencies, or frequency bands, each of which may include a plurality of logical channels. The wireless communication links 122 and 124 may utilize one or more radio access technologies (RATs). Examples of RATs that may be used in a wireless communication link include 3GPP LTE, 3G, 4G, 5G (such as NR), GSM, Code Division Multiple Access (CDMA), Wideband Code Division Multiple Access (WCDMA), Worldwide Interoperability for Microwave Access (WiMAX), Time Division Multiple Access (TDMA), and other mobile telephony communication technologies cellular RATs. Further examples of RATs that may be used in one or more of the various wireless communication links 122, 124 within the communications system 100 include medium range protocols such as Wi-Fi, LTE-U, LTE-Direct, LAA, MuLTEfire, and relatively short-range RATs such as ZigBee, Bluetooth, and Bluetooth Low Energy (LE).

Certain wireless networks (such as LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block") may be 12 subcarriers (or 180 kHz). Consequently, the nominal Fast File Transfer (FFT) size may be equal to 128, 256, 512, 1024 or 2048 for system bandwidth of 1.25, 2.5, 5, 10 or 20 megahertz (MHz), respectively. The system bandwidth also may be partitioned into subbands. For example, a subband may cover 1.08 MHz (i.e. 6 resource blocks), and there may be 1, 2, 4, 8 or 16 subbands for system bandwidth of 1.25, 2.5, 5, 10 or 20 MHz, respectively.

While descriptions of some implementations may use terminology and examples associated with LTE technologies, some implementations may be applicable to other wireless communications systems, such as a New Radio (NR) or 5G network. NR may utilize OFDM with a cyclic prefix (CP) on the uplink (UL) and downlink (DL) and include support for half-duplex operation using time division duplex (TDD). A single component carrier bandwidth of 100 MHz may be supported. NR resource blocks may span 12 sub-carriers with a subcarrier bandwidth of 75 kHz over a 0.1 millisecond (ms) duration. Each radio frame may consist of 50 subframes with a length of 10 ms. Consequently, each subframe may have a length of 0.2 ms. Each subframe may indicate a link direction (i.e. DL or UL) for data transmission and the link direction for each subframe may be dynamically switched. Each subframe may include DL/UL data as well as DL/UL control data. Beamforming may be supported and beam direction may be dynamically configured. Multiple Input Multiple Output (MIMO) transmissions with precoding also may be supported. MIMO configurations in the DL may support up to eight transmit antennas with multi-layer DL transmissions up to eight streams and up to two streams per wireless device. Multi-layer transmissions with up to 2 streams per wireless device may be supported. Aggregation of multiple cells may be supported with up to eight serving cells. Alternatively, NR may support a different air interface, other than an OFDM-based air interface.

In general, any number of communications systems and any number of wireless networks may be deployed in a given geographic area. Each communications system and wireless network may support a particular radio access technology (RAT) and may operate on one or more frequencies. A RAT also may be referred to as a radio technology, an air interface, etc. A frequency also may be referred to as a carrier, a frequency channel, etc. Each frequency may support a single RAT in a given geographic area in order to avoid interference between communications systems of different RATs. In some cases, NR or 5G RAT networks may be deployed.

In some implementations, two or more wireless devices 120a-e (for example, illustrated as the wireless device 120a and the wireless device 120e) may communicate directly using one or more sidelink channels 124 (for example, without using a base station 110a-110d as an intermediary to communicate with one another).

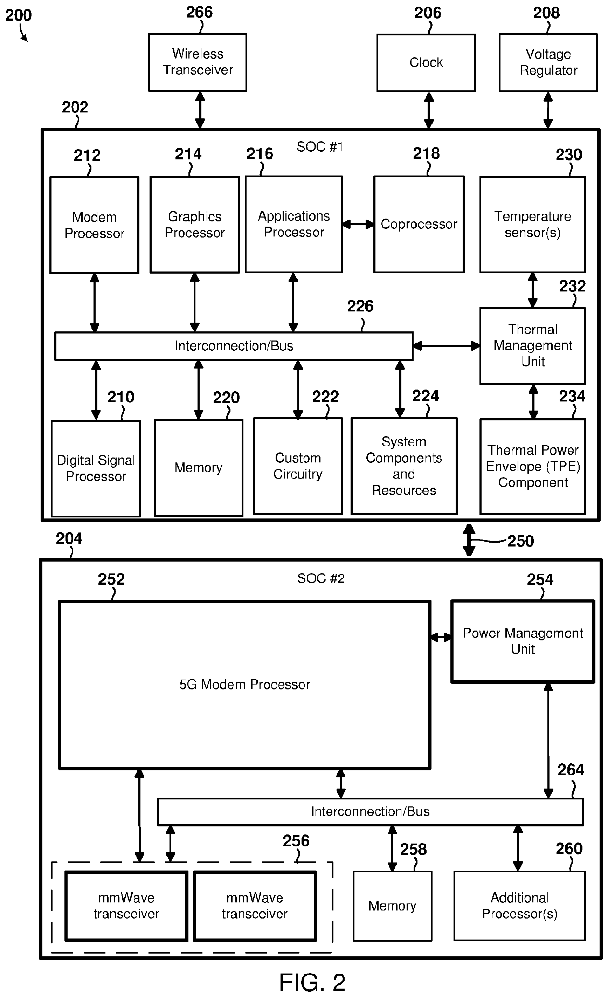

FIG. 2 is a component block diagram illustrating an example computing system that may be configured to preload wireless data within a wireless communication network based on predicted network status and predicted user behavior according to some embodiments. Various implementations may be implemented on a number of single processor and multiprocessor computer systems, including a SOC or a SIP. The example illustrated in FIG. 2 is a SIP 200 architecture that may be used in wireless devices and network devices implementing the various implementations.

With reference to FIGS. 1 and 2, the illustrated example SIP 200 includes two SOCs 202, 204, a clock 206, a voltage regulator 208 and a wireless transceiver 266. In some implementations, the first SOC 202 may operate as central processing unit (CPU) of the wireless device that carries out the instructions of software application programs by performing the arithmetic, logical, control and input/output (I/O) operations specified by the instructions. In some implementations, the second SOC 204 may operate as a specialized processing unit. For example, the second SOC 204 may operate as a specialized 5G processing unit responsible for managing high volume, high speed (such as 5 Gbps, etc.), or very high frequency short wave length (such as 28 GHz mmWave spectrum, etc.) communications.

The first SOC 202 may include a digital signal processor (DSP) 210, a modem processor 212, a graphics processor 214, an application processor 216, one or more coprocessors 218 (such as vector co-processor) connected to one or more of the processors, memory 220, custom circuity 222, system components and resources 224, an interconnection/bus module 226, one or more temperature sensors 230, a thermal management unit 232, and a thermal power envelope (TPE) component 234. The second SOC 204 may include a 5G modem processor 252, a power management unit 254, an interconnection/bus module 264, a plurality of mmWave transceivers 256, memory 258, and various additional processors 260, such as an applications processor, packet processor, etc.

Each processor 210, 212, 214, 216, 218, 252, 260 may include one or more cores, and each processor/core may perform operations independent of the other processors/cores. For example, the first SOC 202 may include a processor that executes a first type of operating system (such as FreeBSD, LINUX, OS X, etc.) and a processor that executes a second type of operating system (such as MICROSOFT WINDOWS 10). In addition, any or all of the processors 210, 212, 214, 216, 218, 252, 260 may be included as part of a processor cluster architecture (such as a synchronous processor cluster architecture, an asynchronous or heterogeneous processor cluster architecture, etc.). In some implementations, any or all of the processors 210, 212, 214, 216, 218, 252, 260 may be a component of a processing system. A processing system may generally refer to a system or series of machines or components that receives inputs and processes the inputs to produce a set of outputs (which may be passed to other systems or components of, for example, the first SOC 202 or the second SOC 250). For example, a processing system of the first SOC 202 or the second SOC 250 may refer to a system including the various other components or subcomponents of the first SOC 202 or the second SOC 250.

The processing system of the first SOC 202 or the second SOC 250 may interface with other components of the first SOC 202 or the second SOC 250. The processing system of the first SOC 202 or the second SOC 250 may process information received from other components (such as inputs or signals), output information to other components, etc. For example, a chip or modem of the first SOC 202 or the second SOC 250 may include a processing system, a first interface to output information, and a second interface to receive information. In some cases, the first interface may refer to an interface between the processing system of the chip or modem and a transmitter, such that the first SOC 202 or the second SOC 250 may transmit information output from the chip or modem. In some cases, the second interface may refer to an interface between the processing system of the chip or modem and a receiver, such that the first SOC 202 or the second SOC 250 may receive information or signal inputs, and the information may be passed to the processing system. A person having ordinary skill in the art will readily recognize that the first interface also may receive information or signal inputs, and the second interface also may transmit information.

The first and second SOC 202, 204 may include various system components, resources and custom circuitry for managing sensor data, analog-to-digital conversions, wireless data transmissions, and for performing other specialized operations, such as decoding data packets and processing encoded audio and video signals for rendering in a web browser. For example, the system components and resources 224 of the first SOC 202 may include power amplifiers, voltage regulators, oscillators, phase-locked loops, peripheral bridges, data controllers, memory controllers, system controllers, access ports, timers, and other similar components used to support the processors and software clients running on a wireless device. The system components and resources 224 or custom circuitry 222 also may include circuitry to interface with peripheral devices, such as cameras, electronic displays, wireless communication devices, external memory chips, etc.

The first and second SOC 202, 204 may communicate via interconnection/bus module 250. The various processors 210, 212, 214, 216, 218, may be interconnected to one or more memory elements 220, system components and resources 224, and custom circuitry 222, and a thermal management unit 232 via an interconnection/bus module 226. Similarly, the processor 252 may be interconnected to the power management unit 254, the mmWave transceivers 256, memory 258, and various additional processors 260 via the interconnection/bus module 264. The interconnection/bus module 226, 250, 264 may include an array of reconfigurable logic gates or implement a bus architecture (such as CoreConnect, AMBA, etc.). Communications may be provided by advanced interconnects, such as high-performance networks-on chip (NoCs).

The first or second SOCs 202, 204 may further include an input/output module (not illustrated) for communicating with resources external to the SOC, such as a clock 206 and a voltage regulator 208. Resources external to the SOC (such as clock 206, voltage regulator 208) may be shared by two or more of the internal SOC processors/cores.

In addition to the example SIP 200 discussed above, various implementations may be implemented in a wide variety of computing systems, which may include a single processor, multiple processors, multicore processors, or any combination thereof

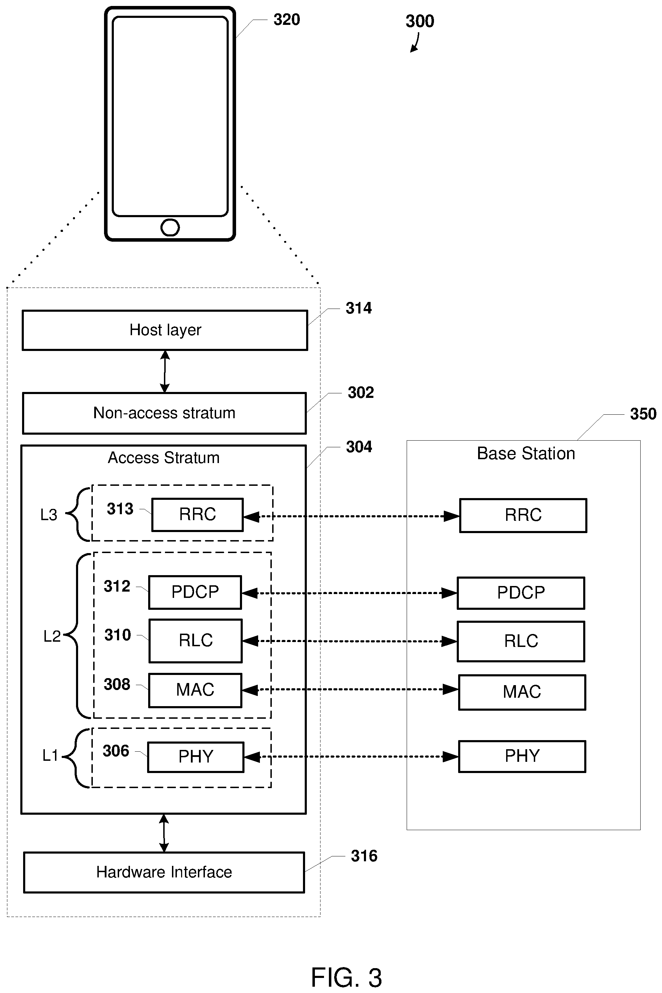

FIG. 3 is a component block diagram of an example of a software architecture 300 including a radio protocol stack for the user and control planes in wireless communications that may be implemented in various embodiments. The software architecture 300 including a radio protocol stack for the user and control planes in wireless communications between a base station 350 (such as the base station 110a in FIG. 1) and a wireless device 320 (such as the wireless device 120a-120e, 200 in FIGS. 1-2). With reference to FIGS. 1-3, the wireless device 320 may implement the software architecture 300 to communicate with the base station 350 of a communication system (such as the communications system 100). In various implementations, layers in software architecture 300 may form logical connections with corresponding layers in software of the base station 350. The software architecture 300 may be distributed among one or more processors (such as the processors 212, 214, 216, 218, 252, 260). While illustrated with respect to one radio protocol stack, in a multi-SIM (subscriber identity module) wireless device, the software architecture 300 may include multiple protocol stacks, each of which may be associated with a different SIM (such as two protocol stacks associated with two SIMs, respectively, in a dual-SIM wireless communication device). While described below with reference to LTE communication layers, the software architecture 300 may support any of variety of standards and protocols for wireless communications, or may include additional protocol stacks that support any of variety of standards and protocols wireless communications.

The software architecture 300 may include a Non-Access Stratum (NAS) 302 and an Access Stratum (AS) 304. The NAS 302 may include functions and protocols to support packet filtering, security management, mobility control, session management, and traffic and signaling between a SIM(s) of the wireless device (such as SIM(s) 204) and its core network 140. The AS 304 may include functions and protocols that support communication between a SIM(s) (such as SIM(s) 204) and entities of supported access networks (such as a base station). In particular, the AS 304 may include at least three layers (Layer 1, Layer 2, and Layer 3), each of which may contain various sub-layers.

In the user and control planes, Layer 1 (L1) of the AS 304 may be a physical layer (PHY) 306, which may oversee functions that enable transmission or reception over the air interface. Examples of such physical layer 306 functions may include cyclic redundancy check (CRC) attachment, coding blocks, scrambling and descrambling, modulation and demodulation, signal measurements, MIMO, etc. The physical layer may include various logical channels, including the Physical Downlink Control Channel (PDCCH) and the Physical Downlink Shared Channel (PDSCH).

In the user and control planes, Layer 2 (L2) of the AS 304 may be responsible for the link between the wireless device 320 and the base station 350 over the physical layer 306. In the various implementations, Layer 2 may include a media access control (MAC) sublayer 308, a radio link control (RLC) sublayer 310, and a packet data convergence protocol (PDCP) 312 sublayer, each of which form logical connections terminating at the base station 350.

In the control plane, Layer 3 (L3) of the AS 304 may include a radio resource control (RRC) sublayer 3. While not shown, the software architecture 300 may include additional Layer 3 sublayers, as well as various upper layers above Layer 3. In various implementations, the RRC sublayer 313 may provide functions including broadcasting system information, paging, and establishing and releasing an RRC signaling connection between the wireless device 320 and the base station 350.

In various implementations, the PDCP sublayer 312 may provide uplink functions including multiplexing between different radio bearers and logical channels, sequence number addition, handover data handling, integrity protection, ciphering, and header compression. In the downlink, the PDCP sublayer 312 may provide functions that include in-sequence delivery of data packets, duplicate data packet detection, integrity validation, deciphering, and header decompression.

In the uplink, the RLC sublayer 310 may provide segmentation and concatenation of upper layer data packets, retransmission of lost data packets, and Automatic Repeat Request (ARQ). In the downlink, while the RLC sublayer 310 functions may include reordering of data packets to compensate for out-of-order reception, reassembly of upper layer data packets, and ARQ.

In the uplink, MAC sublayer 308 may provide functions including multiplexing between logical and transport channels, random access procedure, logical channel priority, and hybrid-ARQ (HARQ) operations. In the downlink, the MAC layer functions may include channel mapping within a cell, de-multiplexing, discontinuous reception (DRX), and HARQ operations.

While the software architecture 300 may provide functions to transmit data through physical media, the software architecture 300 may further include at least one host layer 314 to provide data transfer services to various applications in the wireless device 320. In some implementations, application-specific functions provided by the at least one host layer 314 may provide an interface between the software architecture and a processor.

In other implementations, the software architecture 300 may include one or more higher logical layer (such as transport, session, presentation, application, etc.) that provide host layer functions. For example, in some implementations, the software architecture 300 may include a network layer (such as Internet Protocol (IP) layer) in which a logical connection terminates at a packet data network (PDN) gateway (PGW). In some implementations, the software architecture 300 may include an application layer in which a logical connection terminates at another device (such as end wireless device, server, etc.). In some implementations, the software architecture 300 may further include in the AS 304 a hardware interface 316 between the physical layer 306 and the communication hardware (such as one or more radio frequency (RF) transceivers).

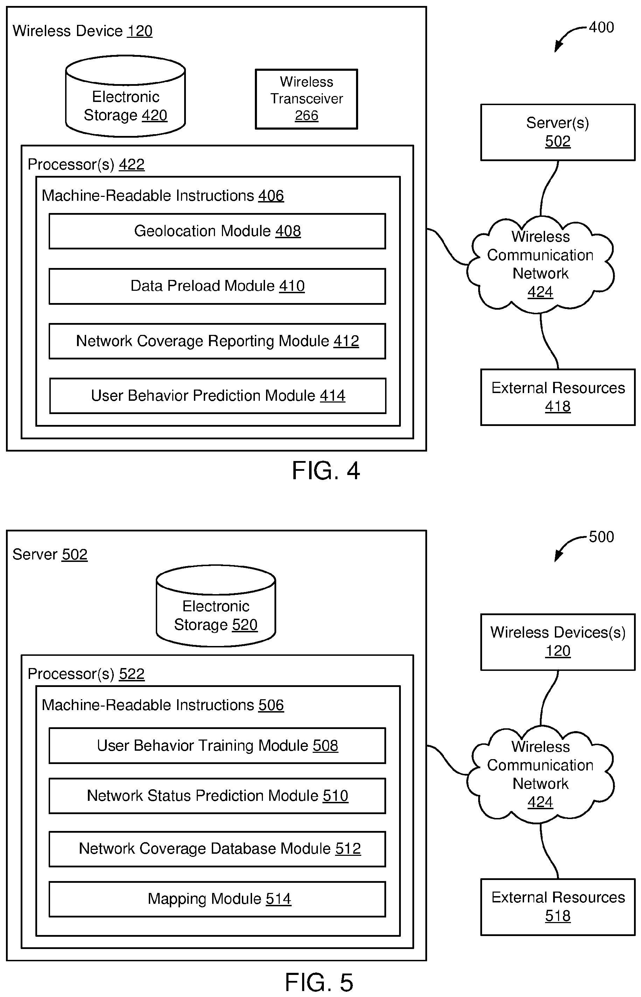

FIG. 4 is a component block diagram illustrating an example system 400 configured to preload wireless data within a wireless communication network based on predicted network status and predicted user behavior according to various embodiments. With reference to FIGS. 1-4, the system 400 may include one or more wireless device(s) 120 (e.g., the wireless device(s) 120a-120e) or one or more server(s) 502, and external resources 418, which may communicate via a wireless communication network 424. External resources 418 may include sources of information outside of the system 400, external entities participating with the system 400, or other resources. In some implementations, some or all of the functionality attributed herein to external resources 418 may be provided by resources included in the system 400.

The wireless device(s) 120 may be configured by machine-readable instructions 406. Machine-readable instructions 406 may include one or more instruction modules. The instruction modules may include computer program modules. The instruction modules may include one or more of a geolocation module 408, a data preload module 410, a network coverage reporting module 412, a user behavior prediction module 414, and other instruction modules (not illustrated). The wireless device 120 may include electronic storage 420 that may be configured to store information related to functions implemented by the geolocation module 408, the data preload module 410, the network coverage reporting module 412, the user behavior prediction module 414, and any other instruction modules. The wireless device 120 may include processor(s) 422 configured to implement the machine-readable instructions 406 and corresponding modules.

The geolocation module 408 may be configured to determine or receive location information (e.g., coordinates) of the wireless device 120. The geolocation module 408 may be configured to store location and speed and/or trajectory information, as determined by a server (e.g., network server, core network 140, etc.), in the electronic storage 420. In some embodiments, the geolocation module 408 may determine or receive location via cellular device satellite tracking, base station tracking, local hardware such as accelerometers and gyroscopes, and other geolocation and device positioning methods. In some embodiments, the geolocation module 408 or electronic storage 420 may store one or more mapping systems including mapping information that may be used during an offline configuration (i.e. limited or no connection to a wireless communications network).

The data preload module 410 may be configured to initiate or otherwise configure the process to preload data (i.e. download data from a wireless communications network in preparation of future use) onto the wireless device 120. The data preload module 410 may be configured to receive a network status prediction from the server(s) 502 indicating when and how long the wireless device 120 may experience unstable network connectivity or no network connectivity. In some embodiments, in response to receiving the network status prediction, the data preload module 410 may be configured to send a request to the server(s) 502 for data preload information including a preload data amount and/or preload data type or types (e.g., video, audio, text, etc). The data preload information may be based on the predicted network coverage status, the current network coverage status including measured wireless network characteristics, and predicted user behavior based on online access history and currently accessed online data as determined by the user behavior prediction module 414. In some embodiments, the data preload module 410 may automatically receive data preload information based on the predicted network coverage status and the predicted user behavior (e.g., if the user behavior is predicted by the server(s) 502 after receiving current access behavior of the wireless device 120).

The network coverage reporting module 412 may be configured to measure, determine, and/or receive (e.g., from external resources 418) one or more wireless network characteristics at a given location as determined by the geolocation module 408. Wireless network characteristics may include network rates (downlink and uplink), signal strength, QOS, RAT type, network bandwidth, base station distribution, and carrier type (e.g., wireless communications company). The network coverage reporting module 412 may be configured to measure, determine, and/or receive a change in one or more wireless network characteristics at a given location identified by the geolocation module 408. For example, the network coverage reporting module 412 may determine that the wireless device 120 is receiving a weaker wireless communications signal than was previously being received, and may cause the processor 422 to instruct the geolocation module 408 to record the coordinates corresponding to the transition point between signal strengths.

The network coverage reporting module 412 may be configured to transmit, or instruct the processor 422 to transmit, coordinates of the wireless device 120, as determined by the geolocation module 408, and the wireless network characteristics to the server(s) 502.

The network coverage reporting module 412 may provide, to the server(s) 502 (e.g., network server, core network 140, etc.), the wireless network characteristics and the location information in time intervals. The time intervals may be predefined, such as every set of seconds or minute(s), or based on a conditional trigger, such as when the network coverage reporting module 412 measures a change in network coverage or in any other wireless network characteristic, or when the geolocation module 408 determines that the wireless device 120 reaches a certain location along a travel path. For example, the wireless device 120 may be travelling along a route, and the network coverage reporting module 412 may transmit the current location of the wireless device 120 and currently measured wireless network characteristics every 30 seconds to the server(s) 502. In another example, the wireless device 120 may be transitioning between an area with full network coverage to an area with no network connectivity, triggering the geolocation module 408 to determine and store the coordinates of transition point in the electronic storage 420, followed by the network coverage reporting module 412 transmitting the coordinates to the server(s).

The user behavior prediction module 414 may be configured to predict an online access behavior of a user of the wireless device 120. The predicted online access behavior may be used by the data preload module 410 to determine data types and data quantities to preload to the wireless device. The predicted online access behavior may be based at least in part on the online data currently being accessed by the wireless device 120, and the online access history of the wireless device 120.

The user behavior prediction module 414 may include trained user behavior prediction models including one or more algorithms and/or neural networks (e.g., recurrent neural networks, batch-normalized recurrent networks, etc.) to determine a predicted online access behavior of a user of the wireless device 120. In some embodiments, the server(s) 502 may include machine-readable instructions to train a user behavior prediction model that may be stored in the electronic storage 420 for local use in predicting online access behavior. The prediction models may output a probability that a user will access certain data types and certain data amounts according to the currently accessed data and history of accessed data. In some embodiments, the user behavior prediction module 414 may include trained behavior prediction models for learning and predicting the type and amount of data at specific locations and/or specific times of online access.

FIG. 5 is a component block diagram illustrating an example system 500 configured to support preload wireless data within a wireless communication network based on predicted network status and predicted user behavior according to various embodiments. With reference to FIGS. 1-5, the system 500 may include one or more server(s) 502 or one or more wireless devices 120, and external resources 518, which may communicate via a wireless communication network 424. For example, the server 502 may be a server, or multiple servers connected within a single network or a series of interconnected networks. External resources 518 may include sources of information outside of the system 500, external entities participating with the system 500, or other resources. In some implementations, some or all of the functionality attributed herein to external resources 518 may be provided by resources included in the system 500.

The server(s) 502 may be configured by machine-readable instructions 506. The machine-readable instructions 506 may include one or more instruction modules. The instruction modules may include computer program modules. The instruction modules may include one or more of a user behavior training module 508, a network status prediction module 510, a network coverage database module 512, a mapping module 514, and other instruction modules (not illustrated). The server 502 may include electronic storage 520 that may be configured to store information related to functions implemented by the user behavior training module 508, a network status prediction module 510, a network coverage database module 512, and any other instruction modules. The server 502 may include processor(s) 522 configured to implement the machine-readable instructions 506 and corresponding modules.

The user behavior training module 508 may be configured to train a user behavior prediction model based on an online access history of a user of a wireless device 120. The user behavior training module 508 may receive online access history of one or more users from the wireless device(s) 120, and/or external resources 516. The user behavior prediction model may include artificial intelligence including one or more algorithms and/or neural networks (e.g., recurrent neural networks, batch-normalized recurrent networks, etc.) to determine a predicted online access behavior of a user (e.g., user of a wireless device 120). The prediction models may be transmitted to the wireless device(s) 120 to be used in determining the probability that a user will access certain data types and certain data amounts according to the currently accessed data.

In some embodiments, the user behavior training module 508 may train behavior prediction models usable for learning and predicting the type and amount of data expected to be accessed at specific locations and/or specific times. For example, a user behavior prediction model may be trained over time to learn and predict user online access behavior based at least in part on a time of day (e.g., morning, noon, evening, etc.) and during specific travel routes (e.g., work commute).

In some embodiments, the user behavior training module 508 may train user behavior prediction models based on the online access history in addition to the current access history of wireless device(s) 120. For example, the server 502 may be part of a network (e.g., core network 140) that provides the currently accessed online data to the wireless device 120, and would therefore be aware of the currently accessed data in addition to the online access history. Thus, the user behavior training module 508 may train the model using both the currently accessed data and the online access history. The model trained using both the currently accessed data and the online access history may be transmitted to the wireless device 120 for local use.

In some embodiments, the user behavior training module 508 may train user behavior prediction models based on the online access history of multiple users. For example, the server 502 may be in communication with server(s) 504 including multiple wireless devices corresponding to multiple users. Two or more of the users may share similar online data accessing habits (e.g., content type, amount, time of day, location, etc.), and the user behavior training module 508 may train one or more user behavior prediction models to be used for two or more of the users.

The network status prediction module 510 may be configured to predict the time that a wireless device (e.g., 120) will reach a network unstable area (i.e. network coverage area with limited or no connectivity), and a duration that the wireless device will experience the unstable network connection. The network status prediction module 510 may receive input information including (i) map information, (ii) trip routing information including start point, end point, and vehicle/mode of transportation (e.g., from wireless device 120), and (iii) network coverage information (e.g., from the network coverage database module 512) representing areas of network connectivity having various levels of network stability. The network status prediction module 510 may use the map information and trip routing information to determine and store a travel route to create a database of travel route(s), and to transmit the travel route to the remote platform(s) for use in mapping and travel applications.

In some embodiments, the network status prediction module 510 may receive location information, such as coordinates of the wireless device 120 determined by the geolocation module 408. The network status prediction module 510 may predict a travel speed and future location of a wireless device (e.g., 120) based on the received location information. The network status prediction module 510 may predict the time that a wireless device will reach a network unstable area (e.g., predicted travel time) and the duration that the wireless device will experience the unstable network connection (e.g., predicted travel duration) based on (i) map information, (ii) the determined/received travel route of the wireless device, (iii) network coverage information, and (iv) the determined speed and/or predicted location of the wireless device. The network status prediction module 510 may transmit the predicted time values to the server 502.

In some embodiments, the network status prediction module 510 may include a network status prediction model. The network status prediction model may be trained based at least in part on coordinate information received from wireless devices (e.g., 120). The network status prediction model may include artificial intelligence including one or more algorithms and/or neural networks (e.g., recurrent neural networks, batch-normalized recurrent networks, etc.) to determine commonly used travel routes. For example, multiple wireless devices may report sets of coordinate information in intervals along a highway. The network status prediction model may be trained to determine a probability that a wireless device will continue to travel on the highway by collecting information regarding the location of one or more wireless devices along over a period of time and using the collected information as a training data set for training a network status prediction model. based at least in part on coordinate information of the wireless device. The network status prediction model may use an initial set of coordinates received from a wireless device as input, and the network status prediction model may output the likelihood that the wireless device will follow the speed and trajectory (i.e. coordinate information) of other wireless devices upon which the model was trained. The commonly used travel routes may be used to determine a predicted location of a wireless device within a network coverage area.

The network coverage database module 512 may be configured to assemble and store a network coverage database that describes a wireless communications network coverage map. The network coverage database module 512 may receive wireless network characteristics and location information (e.g., coordinate) from the wireless device(s) 120 (e.g., network coverage reporting module 412 of wireless device 120). The received wireless network characteristics may correspond to location information as transmitted by the network coverage reporting module, such that one reported location may be associated with one or more wireless network characteristics (e.g., network stability level). The network coverage database module 512 may analyze and group the various received locations to form area boundaries attributed to certain levels of network stability. The network coverage database may include a list of areas, network stability levels, carrier types, and area boundaries defining each area.

The mapping module 514 may be configured to store mapping information and transmit the mapping information to the network status prediction module 510. The mapping information may include geographical information including known travel paths (e.g., highways, roads, etc.), places and destinations, and any other information used in conventional mapping applications. The mapping module 514 may transmit the mapping information to the network status prediction module to be used as input for determining a travel route (e.g., based on trip information selected by a user of the wireless device 120) and for predicting a speed and predicted location of a wireless device within a network coverage area. The mapping module 514 may receive and store, or instruct the electronic storage 520 to store, coordinate information, trip routing information, and/or a planned travel route that may be determined by the network status prediction module 510.

The modules (e.g., user behavior prediction module 414, network status prediction module 510, data preload module 410, etc.) described above with reference to FIGS. 4 and 5 and hereinafter in detail may be implemented in wireless devices (e.g., wireless device 120), servers (e.g., server 502), cloud-based networks, and other devices and system architectures. The various modules may be implemented in the wireless device, by one or more servers in a wireless communications network, or partly in the wireless device and partly by one or more servers in the network. For example, the user behavior model may be trained on the wireless device, or on the server, and the user behavior prediction module 414 may be implemented on the wireless device 120, on the server 502, or on both the wireless device 120 and the server 502.

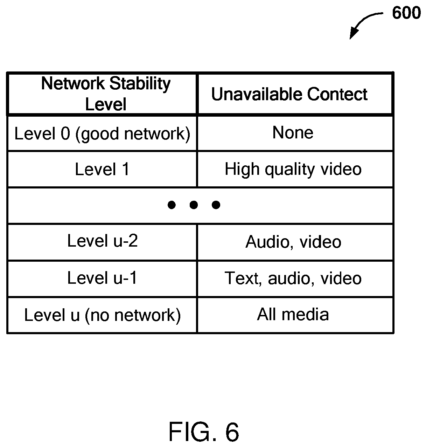

FIG. 6 is a chart 600 illustrating available content per network stability level within a wireless communications network according to some embodiments. A network coverage area may include multiple areas having various stability levels, including levels between a maximum attainable stability (i.e. full signal strength as received and measured from a base station) and no network stability or connection. Depending on the number of distinguishable stability levels within a wireless communications network, various areas within the wireless communications network may be associated with types of available content that may be preloaded or downloaded by wireless devices physically located in each of the corresponding areas. The types of available content may be assigned to each geographic area manually or algorithmically.

At a minimum, a wireless communications network may include two network stability levels: full coverage/connectivity, meaning a wireless device connected to the wireless communications network may transmit and receive all types of data with a base station, and no coverage or connectivity, meaning the wireless device cannot transmit or receive any data with the wireless communications network, no matter the type. In some embodiments in which wireless communications network coverage may include more than two distinguishable network stability levels, certain types of data content may be more difficult to transmit or receive in some areas having a network stability level than in other areas having a different network stability level. For example, high-quality video data may be easily accessible by wireless device proximate to the radiating base station. The same high-quality video data may be difficult or impractical to download due to a low QOS at the signal perimeter of the same base station, such that data may be downloadable, but the user experience is interrupted or effectively halted because download rates are too slow, such as due to delays associated with retransmission requests.

Some embodiments provide for assigning available data types or content to various levels of network stability for use in preloading wireless data within a wireless communication network based on predicted network status and predicted user behavior. As illustrated in FIG. 6, a wireless communications network may include a number of network stability levels that may correspond to geographic areas where certain data types are functionally unavailable. For example, a level 0 network stability level may indicate that all types of data are available to wireless devices. A level "u" network stability level may indicate no available network connection, and that all types of data are unavailable to wireless devices. Any number of network stability levels may be implemented between level 0 and level u network stability levels. For example, an area with network stability level 1 may not provide for efficient downloading of high-quality video. As another example, a network stability two levels above level u may provide for efficient downloading of text, but may not efficiently download audio or video data.

Network stability levels may be assigned types of unavailable content for purposes of preloading wireless data prior to a wireless device experiencing unstable network coverage For example, a wireless device may be in a network coverage area having a network stability of level 0. A prediction may be made (e.g., by the server 502 implementing the network status prediction module 510) indicating that the wireless device is expected to reach a network coverage area having a network stability level of 1 within a specific time, and is expected to remain in that level 1 network coverage area for a specific duration. A prediction may also be made (e.g., by the wireless device 120 implementing the user behavior prediction module 414) indicating what types and how much data content a user of the wireless device will likely access during that predicted duration.

For example, a wireless device may predict that the user will likely try to access high-quality streaming video, followed by text (e.g., news site), and streaming audio. Because the wireless device may not be able to download high-quality streaming video while travelling through the level 1 network coverage area, the wireless device may preload data corresponding to the presently accessed high-quality streaming video while located within a level 0 network coverage area. For example, if the user is streaming a movie, the wireless device may preload data to buffer the movie download sufficiently for the user to not experience an interruption in the movie. The wireless device may also preload the text and streaming audio data, assuming sufficient high-quality video data was previously downloaded, despite text and audio data being downloadable in a level 1 network coverage area. For example, the wireless device may preload text and audio data in the level 0 network coverage area to take advantage of faster download rates.

Network stability levels may be distinguished by a number of wireless network characteristics, including RAT and signal strength. For example, a network stability level and corresponding available content may vary depending on the implemented RAT and signal strength One wireless device may be 4G capable, while another wireless device may only be 3G capable. An example of signal strength as received by a wireless device within a 3G network may be as follows: level 0, greater than -70 dBm; level 1, -71 to -85 dBm, level 2, -86 to -100 dBm; level 3, -101 to -109 dBm; and level 4 (e.g., level u), less than -110 dBm. An example of signal strength as received by a wireless device within a 4G network may be as follows: level 0, greater than -90 dBm; level 1, -91 to -105 dBm; level 2, -106 to -110 dBm; level 3, -111 to -119 dBm; and level 4 (e.g., level u), less than -120 dBm. Thus, because network stability levels may vary by signal strength and signal strength may vary by RAT, network stability charts (e.g., FIG. 6) may be defined specifically based on signal strength and/or each type of RAT.

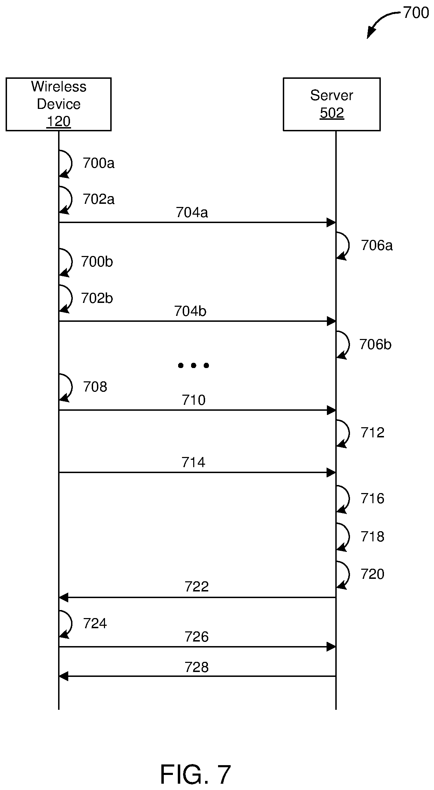

FIG. 7 is a message flow diagram illustrating a method 700 for preloading wireless data within a wireless communication network based on predicted network status and predicted user behavior according to some embodiments. With reference to FIGS. 1-7, the some or all of method 700 may be implemented by a processor (e.g., processor 212, 216, 252, 260, 422, 522) of a wireless device (e.g., 120a-120e, 200, 320, 120) and/or a server 502.

In operation 700a, the wireless device 120 may detect a transition in network coverage or a change in network stability levels. The wireless device 120 may detect and record a change in network carrier information, such as a change in RAT type or a change in network. The wireless device 120 may detect a change in network stability level by detecting a change in one or more predefined factors, such as signal strength For example, the wireless device 120 may determine that a change in network stability has occurred when measured signal strength has changed more than -5 dBm (or another threshold amount) and has remained as such for 5 seconds (or another threshold time).

In operation 702a, the wireless device 120 may record the coordinates corresponding to the location where a transition between network coverage or network stability level occurs. For example, the wireless device 120 may determine and store the coordinates (e.g., longitude and latitude) of a network stability transition location.

In communication 704a, the wireless device 120 may transmit network coverage information to the server 502. The network coverage information may include the network stability level as detected in operation 700 and the transition location coordinates as determined in operation 702a. The wireless device 120 may transmit the network coverage information to the server 502 for developing a network coverage database.

In operation 706a, the server 502 may create a network coverage database or updates an existing network coverage database based on the network coverage information received from the wireless device 120 in communication 704a. The network coverage database may describe carrier information, area boundaries based on coordinate information, and network stability levels for various network coverage areas. The network coverage database may be represented or otherwise used to develop a topographic map that may be utilized by mapping or trip planning applications implemented by one or more wireless devices.

In operations 700b, 702b, 704b, and 706b, the wireless device 120 may repeat the processes of operations 700a, 702a, 704a, and 706a for a subsequent transition location indicating a change in network stability level.

The server 502 may receive network stability information and coordinate information from wireless devices other than the wireless device 120 to develop and further refine the network coverage database. Each wireless device in communication with the server 502 may perform processes equivalent to those described in operations 700a-706a and 700b-706b.

In operation 708, the wireless device 120 may receive user input including trip routing information describing a travel route. The trip routing information may include (but is not limited to) a start point, one or more interim stops, an end point, one or more vehicle types, and/or the like. In some embodiments, the trip routing information may be referred to as trip information.

In communication 710, the wireless device 120 may transmit the received trip routing information to the server 502. The wireless device 120 may transmit the trip routing information (trip information) to the server 502.

In operation 712, the server 502 may store the trip routing information received from the wireless device 120. The server 502 may store or otherwise retrieve (e.g., from electronic storage 520) the trip routing information for use in determining a predicted network status along the travel route of the wireless device 120. In some embodiments, the server 502 may receive or otherwise retrieve from memory map information for use in calculating a travel route based on the trip routing information. In some embodiments, the calculated travel route based on the trip routing information may be transmitted to the wireless device 120 for use in mapping or trip planning applications. In some embodiments, the wireless device 120 may locally store map information to calculate the travel route based on the trip information, and may then transmit the calculated travel route to the server 502 in operation 712.

In communication 714, the wireless device 120 may transmit travel orientation information to the server 502. The travel orientation information may include coordinate information. The coordinate information may include coordinates recorded by the wireless device 120 in predetermined intervals and/or at detected network stability transition locations Communication 714 may be performed continuously or in intervals to repeatedly transmit updated travel information to the server 502. This may allow for the server 502 to provide more accurate and precise predictions of network stability level. In some cases, the transmission in communication 714 can be combined with communication 710. That is, when the received trip routing information is transmitted to the server in communication 710 is sent, the first instance of travel orientation information may be transmitted to the server in communication 714.

In operation 716, the server 502 may retrieve and/or receive map information, travel orientation information, trip routing information, and the network stability information. The server 502 may receive the travel orientation information of the wireless device 120 as described in communication 714. The server 502 may receive map information as described in some embodiments (e.g., from core network 140, server(s) 504, external resources 518, electronic storage 520, etc.). The server 502 may receive trip routing information as described in operations 710 and 712. The server 502 may receive network stability information, such as from a network coverage database or another server within the wireless communications network. In some embodiments, the network stability information may be received by the server 502before, during, or after any other operation as described with reference to FIG. 7.

In operation 718, the server 502 may determine a travel speed of the wireless device 120. The server 502 may determine a speed and/or trajectory of the wireless device 120 based on map information, the travel orientation information received in operation 716, and/or the trip routing information. A speed and/or trajectory of the wireless device 120 may be based at least in part on the distances(s) between the start point and any coordinates subsequently reported in communication 714 and the corresponding times between recording the coordinates.

In some embodiments, the determined travel speed may be used in conjunction with the trip routing information to predict a location of the wireless device 120 along the travel path (e.g., start point, end point) input by a user in operation 708. In some embodiments, the determined travel speed and reported trajectory may be used to determine a projected location of the wireless device 120 at a specified time. For example, a user may not input trip routing information into the wireless device 120. However, based on consecutively reported travel orientation information (e.g., communication 714), a travel speed and trajectory may be predicted based at least in part on multiple coordinate locations. The server 502 may determine a probability that the wireless device 120 will be at a specific location, such as along a commonly used travel route, based on at least two coordinate locations reported by the wireless device 120.

In operation 720, the server 502 predicts the time that the wireless device 120 will enter an unstable network area. The server 520 may predict the duration in which the wireless device 120 will be within the unstable network area. The predicted time for the wireless device 120 to reach an unstable network area may be referred to as a predicted travel time The predicted duration in which the wireless device 120 will be within a network unstable area may be referred to as a predicted travel duration. The server 502 may determine the predicted travel time and the predicted travel duration based on the speed and/or trajectory determined in operation 718, the network stability information from the network coverage database, and the map information. If a predicted location of the wireless device 120 was calculated in operation 718, then the server 502 may determine the predicted travel time and the predicted travel duration based on the predicted location, the network stability information from the network coverage database, and the map information.

In communication 722, the server 502 may transmit a notification including the predicted travel time and predicted travel duration to the wireless device 120. In some embodiments, the notification may include network coverage information (e.g., network stability level, network coverage area) corresponding to the predicted travel time and predicted travel duration. In some embodiments, the notification may include one or more predicted travel times and one or more predicted travel durations corresponding to one or more network coverage areas through which the wireless device 120 is anticipated to travel. In some embodiments, the server 502 may transmit multiple notifications consecutively including information for more than one set of a predicted travel time, predicted travel duration, and corresponding network coverage area.

In operation 724, the wireless device 120 determines a preload data amount and/or preload data type or types. The preload data amount and/or preload data type or types may be determined based on the predicted travel time, the predicted travel duration, and the network coverage information. The preload data amount and preload data type or types may be based on a probability that a user is likely to access specific data types and data amounts corresponding to the user behavior prediction determined by the wireless device 120.

The wireless device 120 may determine what data types to preload based on the received network coverage information. For example, the wireless device 120 may determine that a user is likely to access high-quality video data. The wireless device 120 may then preload high-quality video data when the upcoming network coverage area does not allow for effective downloading of high-quality video data. As another example, the wireless device 120 may determine to not preload text or web data, based on the determined probability that a user is likely to access text or web data, when the upcoming network coverage area allows for effective downloading of text or web data.

The preload data amount may be determined for each preload data type. For example, the wireless device 120 may determine a total preload data amount of 750 MB (megabytes) for preloading before entering an unstable network area, such that 700 MB are dedicated to preloading high-quality video data, and 50 MB are dedicated to preloading text or website data. The wireless device 120 may determine the total amount of data to preload based on the predicted travel duration, such that sufficient data would be preloaded to ensure the user experience is not hindered during the predicted travel duration. The predicted travel time may limit the amount of preload data that may be downloaded before encountering the unstable network area, such that only a portion of a determined preload data amount may be downloadable. The wireless device 120 may prioritize which data types and corresponding preload data amounts should be downloaded when download time is constrained by the predicted travel time.

In communication 726, the wireless device 120 may transmit a request for the preload data amount and/or the preload data type or types as determined in operation 724. The preload data amount and/or preload data type or types may be retrieved by the server 502, or from any server in communication with the server 502 within the wireless communications network (e.g., core network 140).

In communication 728, the server 502 may transmit the requested preload data amounts corresponding to the preload data type or types to the wireless device 120. In some embodiments, the server 502 may retrieve the requested data and transmit the data to the wireless device 120. In some embodiments, the server 502 may transmit a notification to another server storing the requested data to instruct the server to transmit the requested data to the wireless device 120.

The operations and communications illustrated FIG. 7 may be performed in any conceivable order and do not need to be performed in the order as illustrated. For example, the operations 700a through 706a, and 702b through 706b may be performed in any order before, during, or after operations 708 through 728. The operations and communications to develop the network coverage database may be performed by multiple wireless devices, and may be continuous and ongoing while other communications between a wireless device and a server are performed to preload data onto a wireless device.

As another example, communication 726 may occur before or without prompt from communication 722. The wireless device 120 may predict, based on the data access history of the user, that the wireless device 120 will not access certain types of data at a certain time and/or location during the day (e.g., commute). For example, the wireless device 120 may learn that a user does not access text or web data during a specific time during a commute. This may indicate that the user chooses not to access text or web data, or that the user actually cannot effectively access text or web data because the wireless device of the user is in an unstable network area or an area with no network connectivity.

The wireless device 120 may output a probability that a user will access certain data types and certain data amounts according to the currently accessed data. The output probability may be with reference to locations and/or times that the user is likely to access those certain types of data and data amounts. A user behavior prediction model of the wireless device 120 may be trained based on location information (e.g., consecutively reported coordinate information) gathered by the wireless device 120. For example, a user behavior prediction model may be trained to predict user data access behaviors with respect to a morning commute, in which the wireless device 120 travels along a route five days a week within a specific timeframe. Predicting access behavior based on time and/or location may be useful when a user may experience poor network stability almost immediately from embarking on a travel route. For example, the user behavior prediction model may learn that the surrounding neighborhood has little to no network coverage during the first 10 minutes of the user's commute. The wireless device 120 may recognize that no data has been able to be downloaded during those times at those locations when the wireless device 120 attempts to request data. The wireless device 120 may then request information for various applications (e.g., updated traffic information, podcast audio, etc.) to preload data while connected to a wireless network (e.g., WiFi, core network 140, etc.) before losing connectivity to the wireless network and embarking on the commute.

As another example, communication 714 may be performed continuously and repeatedly without regard to the order of operations and communications 700a through 728. The wireless device 120 and any number of other wireless devices may transmit travel orientation information (e.g., coordinates) to the server 502 in predetermined intervals and/or when detecting a change in network stability.

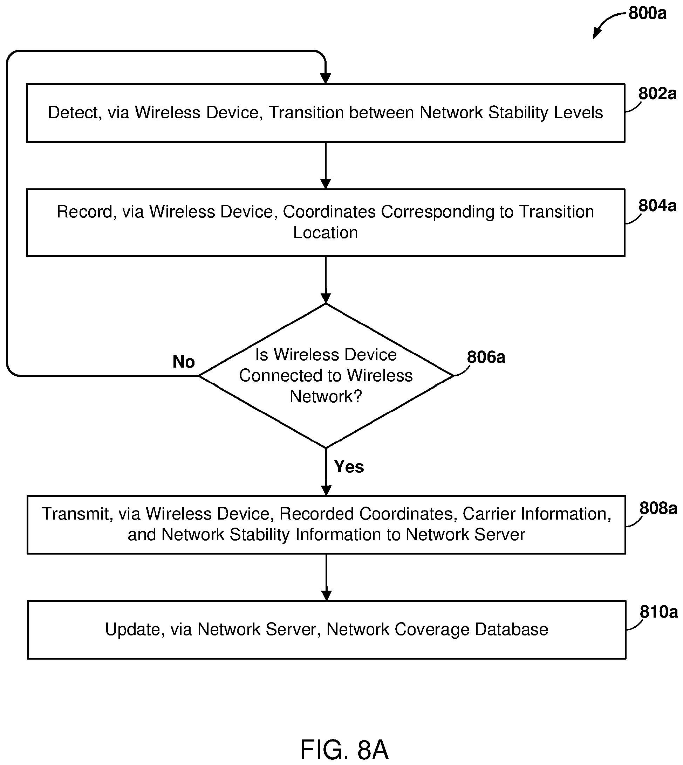

FIG. 8A is a process flow diagram illustrating a method 800a for developing a network coverage database according to some embodiments. With reference to FIGS. 1-8, the method 800a may be implemented by a processor (e.g., processor 212, 216, 252, 260, 422, 522) of a wireless device (e.g., wireless device 120a-120e, 200, 320, 120) and/or of a server (e.g., server 502). A wireless communications network may include a number of base stations (e.g., base station 110, 350) distributed throughout a geographic topology. Base stations within a wireless communication network generally radiate communications signals radially outward up to a specified range, where signal strength weakens as a function of distance from the base station. Signal strength may further be impeded by limiting factors including the surrounding landscape (e.g., manmade structures, mountains, bodies of water, etc.), inclement weather, and base station distribution. Thus, a network coverage database may be developed to predict data types and data quantities to preload in preparation of encountering network impeding landscapes or situations.

In block 802a, a wireless device detects a transition between network stability levels. The wireless device (e.g., wireless device 120a-120e, 200, 320, 120) may detect and record a change in network carrier information, such as RAT type, and/or network stability level, such as signal strength. The wireless device may detect a change in network stability according to one or more predefined factors. For example, the wireless device may determine that a change in network stability has occurred when measured signal strength has changed more than 5 dBm and has remained as such for 5 seconds.

The wireless device may include sensors and other hardware for receiving, detecting, and measuring network stability information. The sensors may be configured to measure a decibel level of a received wireless communications signal. In some embodiments, the wireless device may determine a signal strength or receive a notification indicating a signal strength (e.g., dBm), at a location within a network coverage area. In some embodiments, the wireless device may determine a network stability level by analyzing a download data rate (e.g., across a PDSCH).

The wireless device may detect a transition between network stability levels by monitoring the measured network stability level for changes. The wireless device may monitor the measured network stability level constantly or in intervals (e.g., when downloading data, predefined intervals). The wireless device may determine a transition between network stability levels occurs when there is a significant change in network stability characteristics (e.g., download rate, signal strength, RAT) that is consistent for a specified period. For example, the wireless device may monitor data download rates, and determine that a transition between network stability levels, and therefore network coverage areas, occurs when a data download rate changes from 15 Mbps (megabits per second) to 35 Mbps and remains at roughly 35 Mbps for 10 seconds. As another example, the wireless device may measure a signal strength change of -10 dBm that persists for a period. The wireless device may receive, from a server of a wireless communications network, and store in memory (e.g., electronic storage 420) a database defining sets of signal strength ranges and thresholds based on the RAT in use. For example, the wireless device may be configured to detect a transition between a first range of -71 dBm to -85 dBm, and a second range of -86 dBm to -100 dBm. A transition between network stability levels may occur when the wireless device detects that the signal strength has changed from -80 dBm to -90 dBm, and the signal strength remains at or around -90 dBm for 5 seconds.

In block 804a, the wireless device records coordinates corresponding to a transition location. The wireless device may record the coordinates corresponding to the location where a transition between network stability levels, or network coverage areas, occurs. The wireless device may determine and store the coordinates (e.g., longitude and latitude) of the network stability transition location.

In some embodiments, the wireless device may record carrier information and network stability levels corresponding to recorded coordinates. For example, the wireless device may detect a transition between network coverage areas where the wireless device records coordinate information. The wireless device may detect and record network stability levels corresponding to network coverage areas before and after the transition location. The wireless device may record a first network stability level for a first network coverage area that was traversed prior to reaching the transition location, and may record a second network stability level for a second network coverage area that was traversed after reaching the transition location.

In some embodiments, the wireless device may determine coordinate information corresponding to a transition between network stability levels by determining a speed of the wireless device and an elapsed time. The speed of the wireless device may be determined through wireless communications network means, such as geopositioning and cell tracking, as described in embodiments. The elapsed time may be the time between when the wireless device first detects a change a network stability level (e.g., time = 0 seconds) and when the wireless device verifies the change network stability level (e.g., time = 10 seconds). The time when a wireless device verifies the change in network stability may be a preset wait time after the initially detected change to ensure the change in measured network stability is due to a change in network coverage areas, and not due to temporary network impeding factors (e.g., orientation of the wireless device, repeated stop-and-go movement of the wireless device). In some embodiments, timestamps may be used to determine an elapsed time, such as a global time received from a server, or a locally sourced time (e.g., wireless device on-board clock). The wireless device may record coordinate information corresponding to the location where the wireless device verifies the change in network stability level. Thus, based on the coordinates recorded at verification, the speed of the wireless device, and the elapsed time, a distance from the coordinates may be calculated. The coordinate information corresponding to the initial transition location (e.g., time = 0 seconds) may then be mapped based on the calculated distance value. The transition location coordinates may be located along a mapped travel route of the wireless device.

In some embodiments, the wireless device may keep a log of coordinate information for each potential detection of a transition between network stability levels. The wireless device may log coordinate information when a signal strength or download rate exceeds a threshold range. The coordinate information log may include coordinate information corresponding to changes in measured network stability levels caused by either temporary network impeding factors or actual changes in network coverage areas. The wireless device may verify that each change in measured network stability levels is persistent for a period. Coordinates corresponding to changes in network stability levels that are inconsistent or not persistent may be removed from the log, as the changes are likely caused by temporary network impeding factors. Coordinates corresponding to changes in network stability levels that are consistent and persistent may be stored and recorded, as the changes likely represent an actual transition between network coverage areas.

In some embodiments, the wireless device may be able to record an estimated coordinate location of a transition between network coverage areas despite not having an active connection to a wireless communications network. For example, the wireless device may transition from a stable network coverage area to an area with no network connection. The wireless device may not be able to pinpoint the coordinate information corresponding to the transition location as precisely as an active satellite connection. However, an estimated coordinate location may be based on cell tower triangulation and/or crowd-sourced WiFi information.

In block 806a, a processor of the wireless device determines if the wireless device is connected to a wireless communications network. The coordinate information recorded in block 804a may be transmitted to a server (e.g., server 502), or core network (e.g., core network 140), for the development of one or more network coverage databases. However, the wireless device may not be able to transmit the network coverage information including recorded coordinates, network stability level, and carrier information to a network server if the wireless device is not actively connected to the wireless communications network. If the wireless device is connected to the wireless communications network, the wireless device may transmit the network coverage information to the network server. If the wireless device is not connected to the wireless communications network, the wireless device may not transmit the network coverage information. The wireless device may continue to monitor for and record changes in a network stability level as described with respect to blocks 802a and 804a. The wireless device may transmit the network coverage information when a connection to the wireless communications network is reestablished.

In block 808a, the wireless device may transmit the recorded coordinates, carrier information, and network stability information to a network server (e.g., server 502). The carrier information may include any information related to a wireless communications network provider or carrier. The network stability information may include RAT, signal strength, network stability level, and any other wireless network characteristics. The wireless device may transmit the network coverage information to a network server for developing a network coverage database.

In some embodiments, the wireless device may transmit a notification to the server that a change in network coverage stability has been detected, in which the notification may not include a specific network stability level. For example, the wireless device may not be capable of measuring a precise or accurate signal strength. The server may use the notification to determine a network stability level based on download rates or signal strength of the active network connection to the wireless device as observed by the server.

In block 810a, the server updates the network coverage database. The server may create a network coverage database or update an existing network coverage database based on the network coverage information received from the wireless device in block 808a. The network coverage database may describe carrier information, area boundaries based on coordinate information, and network stability levels for various network coverage areas. The network coverage database may be represented or otherwise used to develop a topographic map that may be utilized by mapping or trip planning applications implemented by one or more wireless devices.

The server may receive network coverage information from multiple wireless devices to develop and further refine the network coverage database. Each wireless device in communication with the server may perform processes equivalent to those described in blocks 802a through 808a for purposes of creating and updating one or more network coverage databases.

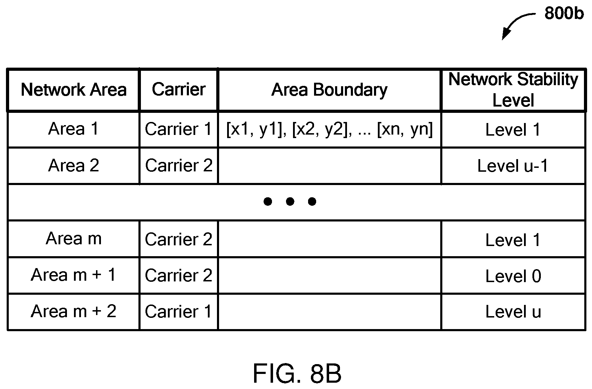

FIG. 8B is a chart illustrating storage of network coverage information within a network coverage database 800b according to some embodiments. A network coverage database may be developed using network coverage information as received from one or more wireless devices as described with reference to FIG. 8A.

A server (e.g., 502) may include a network coverage database to organize network coverage information received from one or more wireless devices. The network coverage database may include network coverage areas defined by carrier information, area boundaries, and network stability levels. The server may organize the coordinate information in the network coverage database algorithmically and/or use artificial intelligence to group the received coordinates appropriately for purposes of forming a logical area boundary. For example, the server may logically or virtually map network coverage areas based on the total received coordinates. The server may correlate certain coordinates with other coordinates to form each network coverage area based on coordinate proximity, carrier information, network stability level, and/or distance from base station. For example, a first coordinate may represent a transition between a first network coverage area having a network stability level of 0 and a second network coverage area having a network stability level of 1. A second coordinate may represent a transition between the second network coverage area a third network coverage area having a network stability level of 2. The server may define and store a network coverage area with an area boundary including at least the first coordinate and the second coordinate and with a network stability level of 1.

In some embodiments, the server may receive coordinate information from wireless devices in intervals, in addition to receiving coordinate information at detected network stability transition locations. For example, the server may receive coordinate information for a first transition location, second transition location, and multiple intervening locations. The coordinates for the first transition location and intervening locations may be associated with a network stability level of 1, and the coordinates for the second transition location may be associated with a network stability level of 0. The server may infer that the intervening transition locations are a continuation of a network coverage area beginning at the first transition location. Thus, the server may create or update a network coverage database to include a network coverage area with an area boundary defined at least by the first transition location and the second transition location.

In some embodiments, a network coverage database may update network coverage area information based on updated network coverage information received from wireless devices. For example, a network coverage area may be extended or strengthened (e.g., RAT change, hardware/software upgrade, removal of impeding structures/environments). Network coverage information received from wireless devices after such changes are made may not coincide with existing network coverage database information. The server may determine that existing network coverage database information may be adjusted or otherwise overwritten based on consistently different network coverage information received from wireless devices. Because coordinate information may represent more than one network coverage area boundary, updates to the coordinates of one transition location may cause the server to adjust the area boundaries of multiple network coverage areas as stored within the network coverage database.

In some embodiments, a network coverage database may represent an entire wireless communications network, regions of a wireless communications network, or any other size area of a wireless communications network. In some embodiments, a network coverage database may include network coverage information corresponding to one base station (e.g., 110, 350), or multiple base stations. In some embodiments, the network coverage area(s) of a single base station may be defined by multiple network coverage databases.

In some embodiments, a wireless communications network may have more than one network coverage database. For example, a wireless communications network may have a first network coverage database defined by normal operating parameters including ideal or average conditions (e.g., clear weather). The wireless communications network may have a second network coverage database defined by abnormal operating conditions in which network stability is temporarily impeded throughout the entire network (e.g., inclement weather). Based on the observed conditions, the wireless communications network may implement the appropriate network coverage database to allow for appropriate data preloading. In some embodiments, a single network coverage database may further define network coverage areas based on network wide impeding conditions. For example, the network coverage database may define network coverage areas having an impeding factor level (e.g., level 1: fog, level 2: thunderstorm, etc.), in addition to carrier information, area boundary, and network stability level.

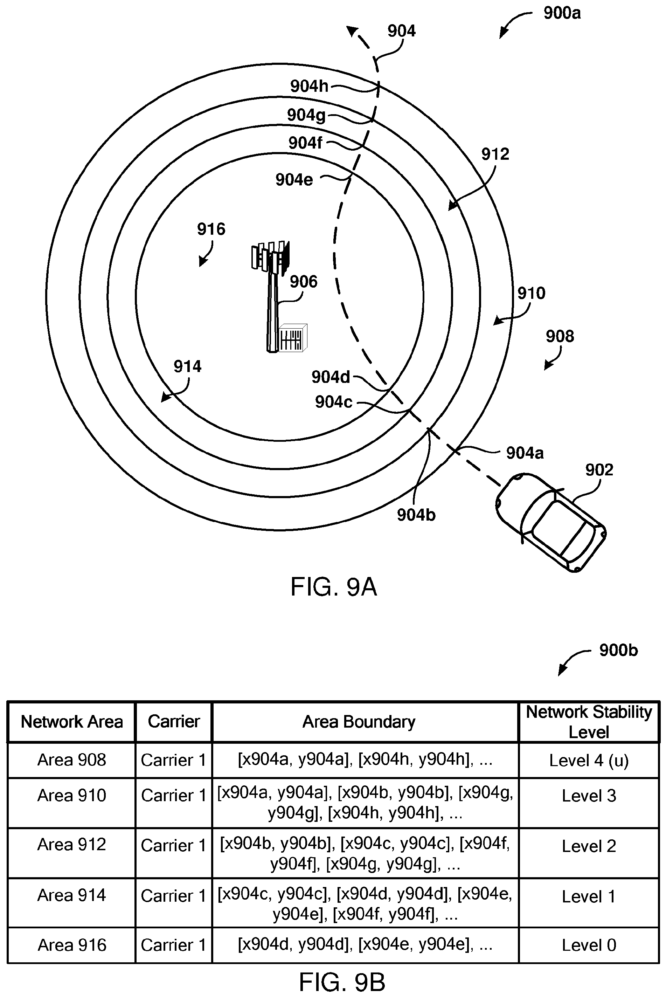

FIG. 9A illustrates a wireless communications network 900a exhibiting various network stability levels according to some embodiments. With reference to FIGS. 1-9A, a wireless device 902 may be a wireless device such as wireless devices 120a-120e, 200, 320, and 120, and a base station 906 may be a base station such as base stations 110 (110a-110e) and 350.

The base station 906 may radiate wireless communications radially outward to form network coverage areas 908, 910, 912, 914, and 916. The network coverage areas 908, 910, 912, 914, and 916 may each exhibit different levels of network stability. For example, the network coverage area 908, being beyond the communication range of base station 906, may have a network stability level of "u," indicating that no wireless data content is available to transmit to a wireless device. The network coverage area 916, immediately surrounding the base station 906, may have a network stability level of 0, indicating that all types of wireless data content may be available to be transmitted to or received from a wireless device. The network coverage areas 910, 912, and 914 may have respectively increasing network stability levels. For example, the network coverage area 910 may have a network stability level indicating that text data may be effectively received by a wireless device, the network coverage area 912 may have a network stability level indicating that text, and audio data may be effectively received by a wireless device, and the network coverage area 914 may have a network stability level indicating that text, audio, and low quality video may effectively be received by a wireless device.

The wireless device 902 may be a vehicle (e.g., an autonomous vehicle, UAV, etc.), a computing device integrated in a vehicle (e.g., a control system or infotainment system), or portable wireless device (e.g., a smartphone, tablet or media player) located in a vehicle that has an anticipated travel path 904. The travel path 904 may be prerouted or premapped by a user input to the wireless device 902, and/or may be a predicted travel path based on learned travel patterns of the user of the wireless device 902. The travel path 904 may be routed through the network coverage areas 908, 910, 912, 914, and 916, such that the wireless device 902 may experience varying network stability levels throughout the journey.

The wireless device 902 may be used to map the network coverage areas 908, 910, 912, 914, and 916 for purposes of developing a network coverage database, which may be used to predict when and for how long the wireless device 902 and/or other wireless devices may experience various network stability levels. For example, the wireless device 902 may detect changes in signal strength along the travel path 904 corresponding to coordinates 904a-904h. The wireless device 902 may begin a trip in the network coverage area 908 outside the effective wireless communications signal range of the base station 906. The wireless device 902 may travel through the network coverage area 908 until reaching the coordinates 904a. At the coordinates 904a, the wireless device 902 may begin to receive network coverage, may determine the received signal strength for purposes of determining a network stability level, and may transmit the coordinates 904a and network stability level to a wireless communications network (e.g., core network 140) of the base station 906. The wireless device 902 may repeat this process for each of the coordinates 904b-g along the travel path 904 until reaching the coordinates 904h. At the coordinates 904h, the wireless device 902, having transitioned from network coverage area 910 back into network coverage area 908, may not be connected to the wireless communications network of the base station 906. Therefore, the wireless device 902 may have to wait until a network connection is reestablished to upload the network stability level and coordinate location of the coordinates 904h.

In some embodiments, the coordinates 904a-h may be represented as longitude and latitude coordinates. In some embodiments, the coordinates 904a-h may be represented as radial distance from the base station 906 as a function of signal strength detected by the wireless device 902.

The network stability levels and coordinates 904a-h reported by the wireless device 902 may be used to develop a network stability database. For example, FIG. 9B illustrates an example of a chart 900b for a network stability database for the wireless communications network 900a according to some embodiments. A server (e.g., server 502) communicatively connected to the wireless communications network may group network stability levels to determine area boundaries for each of the network coverage areas 908, 910, 912, 914, and 916. For example, the server may determine that coordinates 904a and 904h may indicate area boundaries between network coverage area 908 and network coverage area 910. Thus, the boundaries of the network coverage area 908 area may be stored as shown in FIG. 9B. As another example, the server may determine that the coordinates 904a, 904h, 904b, and 904g may indicate area boundaries between network coverage areas 908, 910, and 912. Thus, the boundaries of the network coverage area 910 area may be stored as shown in FIG. 9B.

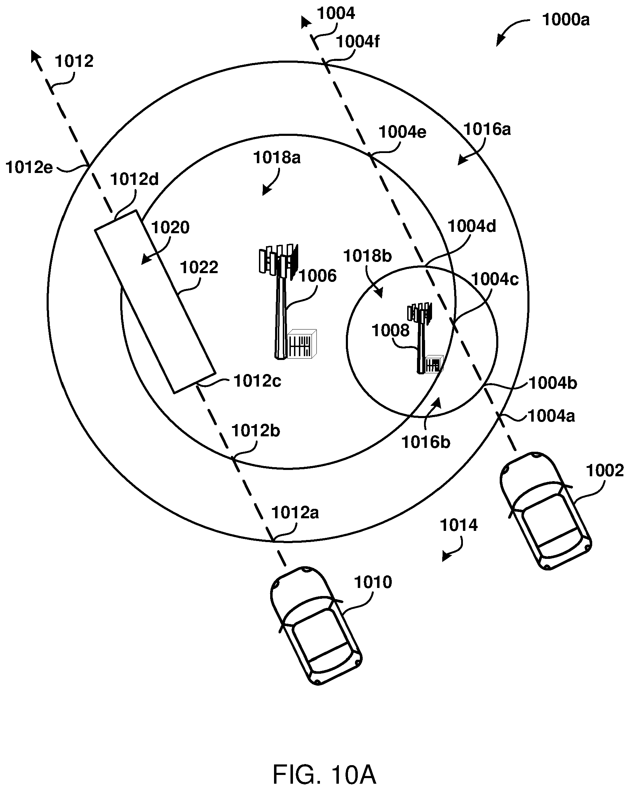

FIG. 10A illustrates a wireless communications network 1000a exhibiting various network stability levels according to some embodiments. With reference to FIGS. 1-10A, wireless device 1002 and 1010 may be a wireless device such as wireless devices 120a-120e, 200, 320, 120, and 902, a base station 1006 may be a base station such as base stations 110 (110a-110e), 350, and 906, and a relay base station 1008 may be a relay base station such as relay base station 110d.

The base station 1006 may radiate wireless communications radially outward to form network coverage areas 1014, 1016a, 1016b, 1018a, 1018b, and 1020. The network coverage areas 1014, 1016a, 1016b, 1018a, 1018b, 1020 may each exhibit different levels of network stability. For example, the network coverage area 1014, being beyond the communication range of base station 1006, may have a network stability level of "u," indicating that no wireless data content is available to be transmitted to a wireless device. The network coverage areas 1018a and 1018b, immediately surrounding the base station 1006, may have a network stability level of 0, indicating that all types of wireless data content may be available to be transmitted to a wireless device.

The network coverage areas 1016a and 1016b may have different network stability levels. For example, a relay base station 1008 (e.g., secondary cell group, SeNB, SgNB, relay base station 110d, etc.) may be in a dual connectivity configuration with the base station 1006 (e.g., master cell group, MeNB, MgNB, base station 110, 350, etc.) This may allow the relay base station 1008 to broadcast a wireless communications signal having a network stability level equivalent or near equivalent to the network stability level of network coverage areas 1018a and 1018b. Thus, network coverage area 1016b may have a better network stability level than network coverage area 1016a as detected or otherwise observed by a wireless device.

The wireless device 1002 may be a vehicle (e.g., an autonomous vehicle, UAV, etc.), a computing device integrated in a vehicle (e.g., a control system or infotainment system), or portable wireless device (e.g., a smartphone, tablet or media player) located in a vehicle that has an anticipated travel path 1004. The travel path 1004 may be prerouted or premapped by a user input to the wireless device 1002, and/or may be a predicted travel path based on learned travel patterns of the user of the wireless device 1002. The travel path 1004 may be routed through the network coverage areas 1014, 1016a, 1016b, 1018a, and 1018b, such that the wireless device 1002 may experience varying network stability levels throughout the journey.

The wireless device 1002 may be used to map the network coverage areas 1014, 1016a, 1016b, 1018a, 1018b for purposes of developing a network coverage database, which may be used to predict when and for how long the wireless device 1002 and/or other wireless devices may experience certain network stability levels. For example, the wireless device 1002 may detect changes in signal strength along the travel path 1004 corresponding to coordinates 1004a-1004f. The wireless device 1002 may begin a trip in the network coverage area 1014 outside the effective wireless communications signal range of the base station 1006. The wireless device 1002 may travel through the network coverage area 1014 until reaching the coordinates 1004a. At the coordinates 1004a, the wireless device 1002 may begin to receive network coverage, may determine the received signal strength for purposes of determining a network stability level, and may transmit the coordinates 1004a and network stability level to a wireless communications network (e.g., core network 140) of the base station 1006. The wireless device 1002 may repeat this process for each of the coordinates 1004b-1004f along the travel path 1004 until reaching the coordinates 1004f. At the coordinates 1004f, the wireless device 1002, having transitioned from network coverage area 1016a back into network coverage area 1014, may not be connected to the wireless communications network of the base station 1006. Therefore, the wireless device 1002 may have to wait until a network connection is reestablished to upload the network stability level and coordinate location of the coordinates 1004f. In some embodiments, the coordinates 1004a-1004f may be represented as longitude and latitude coordinates

The wireless device 1010 may be a vehicle (e.g., an autonomous vehicle, UAV, etc.), a computing device integrated in a vehicle (e.g., a control system or infotainment system), or portable wireless device (e.g., a smartphone, tablet or media player) located in a vehicle that has an anticipated travel path 1012. The travel path 1012 may be prerouted or premapped by a user input to the wireless device 1010, and/or may be a predicted travel path based on learned travel patterns of the user of the wireless device 1010. The travel path 1012 may be routed through the network coverage areas 1014, 1016a, 1018a, and 1020, such that the wireless device 1010 may experience varying network stability levels throughout the journey.

The wireless device 1010 may be used to map the network coverage areas 1014, 1016a, 1018a, and 1020 for purposes of developing a network coverage database, which may be used to predict when and for how long the wireless device 1010 and/or other wireless devices may experience certain network stability levels. For example, the wireless device 1010 may detect changes in signal strength along the travel path 1012 corresponding to coordinates 1012a-1012e. The wireless device 1010 may begin a trip in the network coverage area 1014 outside the effective wireless communications signal range of the base station 1006. The wireless device 1010 may travel through the network coverage area 1014 until reaching the coordinates 1012a. At the coordinates 1012a, the wireless device 1010 may begin to receive network coverage, may determine the received signal strength for purposes of determining a network stability level, and may transmit the coordinates 1012a and network stability level to a wireless communications network (e.g., core network 140) of the base station 1006. The wireless device 1010 may repeat this process for the coordinates 1012b and 1012d along the travel path 1012.

Network coverage area 1020 may indicate a "dead zone" 1022 that may be a structure, natural formation, environmental effect, or any other situation causing a loss of connection between a wireless device and the wireless communications network 1000a. For example, the network coverage area may be a tunnel, bridge, forest, or the location of severe weather conditions. At the coordinates 1012c, the wireless device 1010, having transitioned from network coverage area 1018a into network coverage area 1020, may not be connected to the wireless communications network of the base station 1006. Therefore, the wireless device 1010 may not be able to transmit the network stability level and coordinate location corresponding to the coordinates 1012c until reaching coordinates 1012d. At coordinates 1012d, a network connection may be reestablished via network coverage area 1016a and the wireless device 1010 may transmit the network stability level (e.g., level u) and coordinate location of the coordinates 1012c.

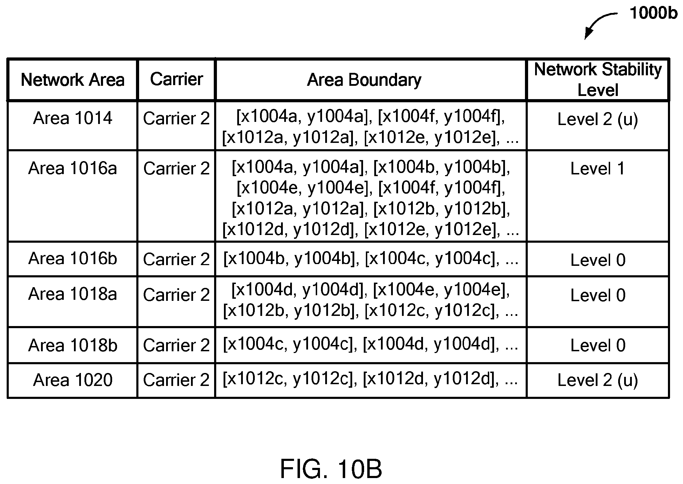

The network stability levels and coordinates 1004a-1004f and 1012a-1012e reported by the wireless devices 1002 and 1010 may be used to develop a network stability database. For example, FIG. 10B illustrates an example of a chart 1000b for a network stability database for the wireless communications network 1000a according to some embodiments.

A server (e.g., server 502) communicatively connected to the wireless communications network may group network stability levels to determine area boundaries for each of the network coverage areas 1014, 1016a, 1016b, 1018a, 1018b, 1020. For example, the server may determine that coordinates 1004a, 1004f, 1012a, and 1012e may indicate area boundaries between network coverage area 1014 and network coverage area 1016a. Thus, the boundaries of the network coverage area 1014 area may be stored as shown in FIG. 10B. As another example, the server may determine that the coordinates 1012c and 1012d may indicate area boundaries between network coverage areas 1016a, 1018a, and 1020. Thus, the boundaries of the network coverage area 1020 area may be stored as shown in FIG. 10B. The server may distinguish between network coverage area 1014 and 1020 despite having a same network stability level of u, or no connection. In some embodiments, the server may group coordinates with same network stability levels as stored in the network coverage database.

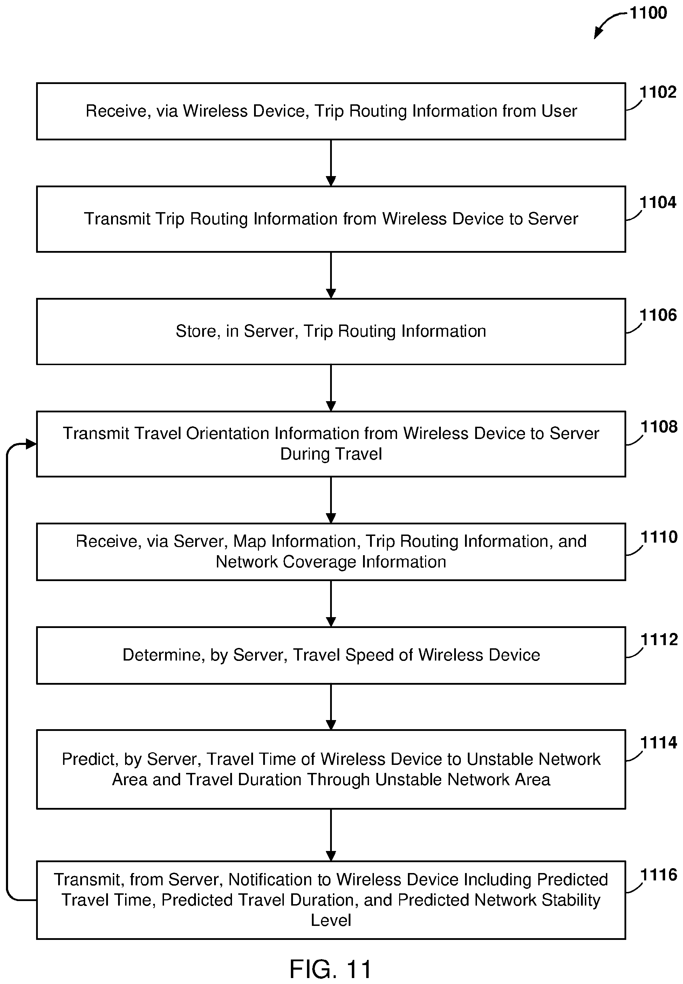

FIG. 11 is a process flow diagram illustrating a method 1100 for predicting a travel time to a network coverage area and a travel duration through the network coverage area according to some embodiments. With reference to FIGS. 1-11, the method 1100 may be implemented by a processor (e.g., processor 212, 216, 252, 260, 422, 522) of a wireless device (e.g., 120a-120e, 200, 320, 120, 902, 1002, 1010) and/or a server 502.

A wireless communications network server (e.g., server 502) may be used to determine a predicted travel time and predicted travel duration. A predicted travel time may refer to an anticipated time for a wireless device (e.g., wireless device 120a-120e, 200, 320, 120) to reach an unstable network area. A predicted travel duration may refer to the anticipated duration in which the wireless device will be travelling through a network unstable area. The predicted travel time and predicted travel duration may be based on at least on a determined travel speed of a wireless device.

In block 1102, the wireless device may receive trip routing information describing a travel route from a user of the wireless device. The trip routing information may include a start point, one or more interim stops, an end point, and one or more vehicle types.

In some embodiments, the user of the wireless device may begin the processes as described with reference to FIG. 11 by activating a "data preload mode" in an application implemented by the wireless device. Activating a "data preload mode" or the like may configure the wireless device to preload data from a wireless communications network. Activating a "data preload mode" or the like may prompt the user to enter trip routing information into an interface or display of the wireless device. In some embodiments, the trip routing information may be referred to as trip information.

In block 1104, the wireless device may transmit the received trip routing information to the server. The wireless device may transmit (but not limited to) the start point, the one or more interim stops, the end point, and the one or more vehicle types to the server for purposes of determining a predicted travel time and predicted travel duration.

In block 1106, the server may store the trip routing information received from the wireless device. The server may store or otherwise retrieve (e.g., from electronic storage 520) the trip routing information for use in determining a predicted network status along the travel route of the wireless device. In some embodiments, the server may receive or otherwise retrieve from memory map information for use in calculating a travel route based on the trip routing information. The server may store or otherwise cause a memory of the server to store a travel route corresponding to the received trip routing information. The travel route may include the trip routing information including the start point, the one or more interim stops, the end point, and the one or more vehicle types. The server may logically or virtually map the travel route based on the coordinates corresponding to the start point, the one or more interim stops, and the end point based on the one or more vehicle types. The mapped travel route may include any number of additional benchmark coordinates between the start point, the one or more interim stops, and the end point. The benchmark coordinates may be used as checkpoints, in addition to the start point, the one or more interim stops, and the end point, for use in determining a speed of the wireless device.

In some embodiments, the calculated travel route based on the trip routing information may be transmitted to the wireless device for use in mapping or trip planning applications. In some embodiments, the wireless device may locally store map information to calculate the travel route based on the trip information, and may then transmit the calculated travel route to the server for storage.

In block 1108, the wireless device may transmit travel orientation information to the server during travel. The travel orientation information may include coordinate information. The coordinate information may include coordinates recorded by the wireless device in predetermined intervals and/or at detected network stability transition locations. The processes described in block 1108 may be performed continuously or in intervals to repeatedly transmit updated travel information to the server This may allow for the server to provide more accurate and precise values for predicted travel time and predicted travel duration.

The server may use the travel orientation information to update the trip routing information. As described in block 1106, the server may store or otherwise cause a memory to store a travel route including the start point, the one or more interim stops, the end point, and any number of benchmark coordinates. As the wireless device progress along the travel route, the wireless device may transmit coordinate information corresponding to the start point, the one or more interim stops, the end point, and any number of benchmark coordinates to the server.

The coordinates may be associated with a timestamp or an elapsed time value, which may be transmitted to the server along with the coordinate information. For example, each of the coordinates transmitted by the wireless device may have a timestamp with respect to a global timer. As another example, each of the coordinates transmitted by the wireless device may have an elapsed time value defined by the difference between the trip start time (e.g., time = 0 seconds) and when each set of coordinates was recorded. The server may store or cause a memory of the server to store the timestamps and/or elapsed time values with their corresponding coordinates. For example, the server may store a travel route in a database having at least a start point and an interim stop point, as defined by the user as described in block 1102. At a trip start, the start point and interim stop point may each be stored in association with elapsed time values of 0 seconds. The wireless device may transmit benchmark coordinates (e.g., in intervals) to the server as the user of the wireless device traverses travel route. For example, a first benchmark coordinate may be reached at an elapsed time value 30 seconds from the trip start, a second benchmark coordinate may be reached at an elapsed time value 1 minute from the trip start, and the interim stop point may be reached at elapsed time value of 2 minutes from the trip start. The server may then update the stored travel route information to associate these elapsed time values with the corresponding coordinate information. The coordinate information and updated time values may be used in further processes for purposes of determining a speed of the wireless device.

In block 1110, the server may receive map information, trip routing information, and network coverage information. The server may receive and/or retrieve map information as described in some embodiments (e.g., from core network 140, server(s) 504, external resources 518, electronic storage 520, etc.). The server may retrieve and/or receive trip routing information as described in block 1106. The server may receive network coverage information from a network coverage database. In some embodiments, the network coverage information may be received by the server before, during, or after any other block as described with reference to FIG. 11. In some embodiments the network coverage information may be determined and transmitted to the server as described with reference to FIG. 8A.

In block 1112, the server may determine a travel speed of the wireless device. The server may determine a speed and/or trajectory of the wireless device based on map information, the travel orientation information of the wireless device as described in block 1108, and/or the trip routing information. A predicted location of the wireless device may be determined based on the determined travel speed.

A speed and/or trajectory of the wireless device may be based at least in part on the distances(s) between the start point and any coordinates (e.g., benchmark coordinates, coordinates for one or more interim stops and end point), and the corresponding times between recording the coordinates. For example, first coordinates with a first timestamp and second coordinates with a second timestamp may be transmitted to the server according to the processes described in block 1108. A speed (e.g., miles per hour, kilometers per hour) of the wireless device may be equal to the distance between the first coordinates and the second coordinates divided by the elapsed between the wireless device recording each set of coordinates. In some embodiments, a speed of the wireless device may be an average speed as determined between multiple coordinates.

For example, as previously described with reference to block 1108, a first benchmark coordinate may be reached at an elapsed time value 30 seconds from the trip start, a second benchmark coordinate may be reached at an elapsed time value 1 minute from the trip start, and an interim stop point may be reached at elapsed time value of 2 minutes from the trip start. The distance between the trip start point and the first benchmark coordinate may be 0.25 miles (roughly 0.4 kilometers), the distance between the first benchmark coordinate and the second benchmark coordinate may be 0.33 miles (roughly 0.53 kilometers), and the distance between the distance between the second benchmark coordinate and the interim stop point may be 0.33 miles (roughly 0.53 kilometers). Thus, server may calculate the speeds between locations as 30 miles per hour (mph) (roughly 48.3 kilometers per hour (kph)), 40 mph (roughly 64.4 kph), and 20 mph (32.2 kph) respectively.

In some embodiments, the server may calculate an average speed for estimating a predicted travel time and predicted travel duration. An average speed may be useful for predicting travel times and travel durations in situations involving stop-and-go travel, such as on a train making multiple stops or highway traffic. With reference to the aforementioned example, the wireless device exhibited an average speed of 27.3 mph (roughly 43.9 kph) between the trip start point and the interim stop point. In some embodiments, the server may calculate an average speed based on any number of previously calculated speed values (i.e. between two coordinates, four coordinates, ten coordinates, etc.).

In some embodiments, the determined travel speed may be used in conjunction with the trip routing information to predict a location of the wireless device along the travel path (i.e. start point, end point) corresponding to the trip information input by a user in block 1102. In some embodiments, the determined travel speed and/or trajectory may be used to determine a projected location of the wireless device at a specified time. For example, a travel route of the wireless device may be mapped based on trip routing information and map information. The travel route may consist of a planned route including coordinates that a wireless device has not yet reached. Based on the determined speed of the wireless device and the distances along the travel route, the server may predict the location of the wireless device along the travel route at any given time.

In some embodiments, a user may choose not to input trip routing information into the wireless device to perform the processes described in blocks 1102, 1104, and 1106. However, based on consecutively reported travel orientation information (e.g., block 1108), a travel speed and trajectory may be predicted by the server based on multiple coordinate locations. The server may implement a network status prediction model to determine a probability that a wireless device will be at a specific location, such as along a commonly used travel route, based on a minimum of two coordinate locations reported by the wireless device. The network status prediction model may learn commonly used travel routes from multiple devices to serve as trip routing information for a single wireless device. This may allow a user to initiate a "data preload mode" without entering a predefined travel route.

For example, a user may initiate a "data preload mode" before embarking on a trip without entering a start point and an end point. The wireless device, triggered by the "data preload mode," may transmit coordinates to the server sporadically or in intervals. The server may determine a speed and/or trajectory (e.g., northbound, northeast, at an angle with respect to a pole of the Earth, etc.) based on at least two coordinates received from the wireless device. The server may determine, based on the received coordinates and map information, that the wireless device is travelling along an interstate highway Based on map information, the predicted travel path, and the determined speed and/or trajectory, the server may predict a location of the wireless device at any given time.

As another example, a user may initiate a "data preload mode" causing a wireless device to transmit coordinates to the server. The server may determine, based on at least two received coordinates, that the wireless device is travelling at 200 mph (roughly 322 kph). The server may determine that the wireless device is travelling via train based on the high travel speed. A server may include a repository of trip routing information received from multiple wireless devices over time, which may include trip routing information for various trip start points, end points, interim stop points, and vehicle types. The server may search the repository for trip routing information including a train vehicle type and the coordinates received from the wireless device. The server may then leverage the applicable trip routing information to determine a probability that the wireless device is travelling according to one of the travel paths represented by the applicable trip routing information.

In some embodiments, the server may leverage real-time traffic and/or real-time schedule (e.g., updated train schedule) information to determine a projected speed and projected location of a wireless device. A projected speed and location based on real-time traffic and scheduling data may provide for more accurate determinations for predicted travel times and predicted travel durations.

In block 1114, the server may predict the time that the wireless device will enter an unstable network coverage area, and predicts the duration in which the wireless device will be within the unstable network area. The predicted time that the wireless device will enter an unstable network coverage area may be referred to as a predicted travel time. The predicted duration in which the wireless device will be travelling through an unstable network coverage area may be referred to as a predicted travel duration. The server may determine the predicted travel time and the predicted travel duration based on the speed and/or trajectory as determined in block 1112, the network stability information from the network coverage database, and the map information. If a projected location of the wireless device was calculated in block 1112, then the server may determine the predicted travel time and the predicted travel duration based on the predicted location, the network stability information from the network coverage database, and the map information.

In some embodiments, the network stability information, which may define topographical areas having various network stability levels, may be overlaid onto a map either visually (e.g., virtual map) or computationally (e.g., set of matrices, data set, etc.) Based on the predicted speed and/or predicted location of the wireless device, the server may identify how long the wireless device will take to reach a next network coverage area having a stability level different from the current network coverage area. The server may also determine the duration in which the wireless device will be travelling through the next network coverage area before reaching a subsequent network coverage having a different network stability level.

For example, as described with reference to FIG. 9A, trip routing information for travel path 904 may be determined by the wireless device 902 through various methods, including automatic operations, depending upon circumstances. If the user is using a navigation application to receive directions to a destination, the wireless device may determine the travel path 904 based upon a travel route that has been determined by the navigation application. As another example, the wireless device 902 may determine the travel path 904 based on a calendar entry in combination with a navigation application. As another example, the wireless device 902 may determine the travel path 904 based on previous routes traveled by the user during similar circumstances (e.g., time of day, day of week, etc.). As a further example, the wireless device 902 may determine the travel path 904 based on information entered into the wireless device by the user. It is assumed for purposes of this example that a network coverage database has been created as described with reference to FIGS. 9A and 9B. The wireless device 902 may store the trip routing information locally until reaching coordinates 904a, upon which the wireless device will gain network coverage and may transmit the trip routing information to the base station 906 (e.g., blocks 1104, 1106).

The base station 906 may include a server or be connected to a server (e.g., server 502). The server may determine that establishing communications with the wireless device 902 at coordinates 904a may indicate that the wireless device 902 was located at the coordinates 904a when transmitting the trip routing information. Accordingly, the server may update a repository including the trip routing information to include a timestamp, or elapsed time value from trip start, corresponding to coordinates 904a. The wireless device 902 may transmit coordinates (e.g., benchmark coordinates) to the server while travelling within the network coverage area 910 (e.g., block 1108). The server may receive the coordinates from the wireless device 902 to determine a speed of the wireless device 902 based at least in part on the distance travelled and time differences between coordinates 904a and any subsequently received coordinates. Based on the calculated speed and network coverage database, the server may determine a predicted travel time for the wireless device 902 to reach the next network coverage area 912 at coordinates 904b, where the network coverage area 912 has a different network stability level than network coverage area 910. Based on the calculated speed and network coverage database, the server may also determine a predicated travel duration for the wireless device 902 to travel through the network coverage area 912 to reach coordinates 904c representing the transition to network coverage area 914 having a different network stability level. For example, the server may predict that the wireless device 902 will reach network coverage area 912 in 3 minutes, and will take 5 minutes to pass through network coverage area 912 to reach network coverage area 914 (i.e. 8 minutes to reach network coverage area 914).

In block 1116, the server may transmit a notification including the predicted travel time and predicted travel duration to the wireless device. In some embodiments, the notification may include network coverage information (e.g., network stability level, network coverage area) corresponding to the predicted travel time and predicted travel duration. In some embodiments, the notification may include one or more predicted travel times and one or more predicted travel durations corresponding to one or more network coverage areas through which the wireless device is anticipated to travel. For example, as described with reference to FIG. 9A, a server may transmit to the wireless device 902 predicted travel times for the wireless device 902 to reach coordinates 904b-h and predicted travel durations for the wireless device to travel through network coverage areas 910, 912, 914, and 916 between the coordinates 904a-h.

In some embodiments, the server may consecutively transmit multiple notifications including information for more than one set of a predicted travel time, predicted travel duration, and corresponding network coverage area.

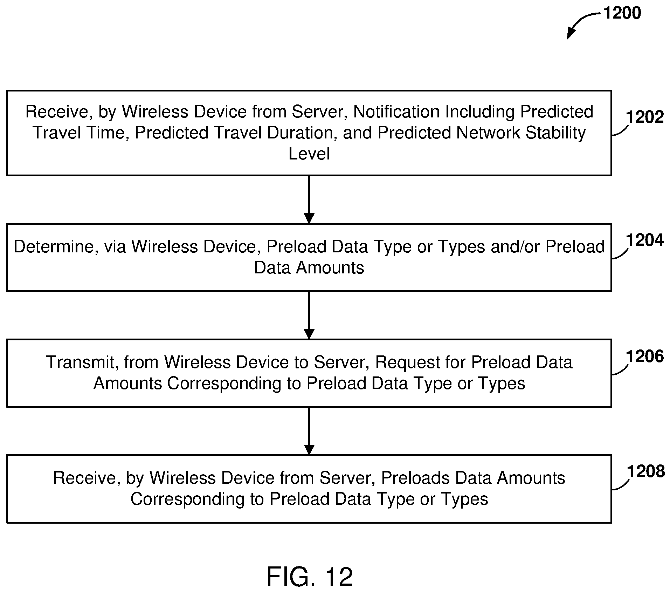

FIG. 12 is a process flow diagram illustrating a method 1200 for preloading data onto a wireless device according to some embodiments. With reference to FIGS. 1-12, the method 1200 may be implemented by a processor (e.g., processor 212, 216, 252, 260, 422, 522) of a wireless device (e.g., 120a-120e, 200, 320, 120, 902, 1002, 1010) and/or a server 502. The wireless device may make a request for and preload a data amount for one or more data types based on a predicted travel time and predicted travel duration received from a server.

In block 1202, the wireless device receives a notification including a predicted travel time for the wireless device to reach a transition in network coverage areas and predicted travel duration to travel through the upcoming network coverage area. In some embodiments, the wireless device may receive the notification from a server. In some embodiments, the notification may include network coverage information (e.g., network stability level, network coverage area) corresponding to the predicted travel time and predicted travel duration. In some embodiments, the notification may include one or more predicted travel times and one or more predicted travel durations corresponding to one or more network coverage areas through which the wireless device is anticipated to travel.

For example, as described with reference to FIG. 9A, the wireless device 902 may receive a notification including predicted travel times for the wireless device 902 to reach coordinates 904b-904h and predicted travel durations for the wireless device to travel through network coverage areas 910, 912, 914, and 916 between the coordinates 904a-904h. The notification may include network stability levels for each network coverage area 908, 910, 912, 914, and 916 as described with reference to FIG. 9B. The network stability levels may be used by the wireless device 902 to determine when, how much, and what types of data to preload based on the predicted travel times and predicted travel durations.

In some embodiments, the wireless device may receive multiple notifications consecutively including information for more than one set of a predicted travel time, predicted travel duration, and corresponding network coverage area. The wireless device may receive or otherwise retrieve (e.g., from electronic storage 420) the notification for further processing.

In block 1204, the wireless device may determine one or more preload data types and/or preload data amounts. The preload data amounts and/or preload data types may be determined based on the predicted travel time, the predicted travel duration, and the network coverage information The preload data amounts and preload data type or types may be based on a probability, as determined by the wireless device, that a user is likely to access certain types and certain amounts of data. The preload data type or types and preload data amounts may be based at least in part on what data types may become unavailable for downloading by a wireless device, and how long those data types will be unavailable. Longer unavailability a data type may result in a higher preload data amount. Data types may include high quality video, standard quality video, low quality video, audio, messaging, text, and any other data type implemented in conventional wireless communications networks.

In some embodiments, a wireless device may include a user behavior prediction model trained by a server. The wireless device may predict data types and data quantities a user is likely to access, and when and where a user is likely to access those data types and data quantities.

In some embodiments, input into user behavior prediction model may include data access history, such as the last ten data types used in chronological order. Input into user behavior prediction model may include time values since an application or data type was last used, and/or how often an application or data type is used. For example, the user behavior prediction model may be trained to indicate that an application is rarely used despite being used most recently. The wireless device may determine that there is a low probability that the rarely-used application will be used. In some embodiments, input into a user behavior prediction model may include data types that a wireless device will be able to access at a given time. For example, the wireless device may receive an indication of predicted travel time and predicted travel duration values, and/or predicted network coverage stability levels for upcoming network coverage areas. Based on the predicted network coverage stability levels and predicted travel time and duration, input to the wireless device may include data types currently accessible for downloading. For example, the wireless device may be located within a network coverage area in which high-quality video is not able to be downloaded efficiently. Input information to the user behavior prediction model may then include all data types except high-quality video.

A user behavior prediction model may include any conceivable configuration of artificial intelligence or neural networks. For example, the user behavior prediction model may have a first input including a data access history of a user, and a second input including the available data types that a wireless device currently has access to. The first input may be input into a series of LSTM and BN (e.g., LSTM, BN, LSTM), to then be concatenated with the second input. The resulting concatenation may be introduced to a number of dense layers and Softmax functions (e.g., dense layer, dense layer, Softmax function) to output a probability that a user will access a certain amount of data corresponding to a number of available data types.

The wireless device may determine what data types to preload based on the received network coverage information. For example, the wireless device may determine that a user is likely to access high-quality video data. The wireless device may then preload high-quality video data when the upcoming network coverage area does not allow for effective downloading of high-quality video data. As another example, the wireless device may determine to not preload text or web data, based on the determined probability that a user is likely to access text or web data, when the upcoming network coverage area allows for effective downloading of text or web data.

The preload data amount may be determined for each preload data type. For example, the wireless device may determine a total preload data amount of 200 MB for preloading before entering one or more unstable network areas, such that 100 MB are dedicated to preloading mapping application data, 60 MB are dedicated to preloading audio data, and 40 MB are dedicated to preloading text or website data. The wireless device may determine the total amount of data to preload based on the predicted travel duration, such that sufficient data would be preloaded to ensure the user experience is not hindered during the predicted travel duration. The predicted travel time may limit the amount of preload data that may be downloaded before encountering the unstable network area, such that only a portion of a determined preload data amount may be downloadable within a given timeframe. The wireless device may prioritize which data types and corresponding preload data amounts should be downloaded when download time is constrained by the predicted travel time.

For example, as described with reference to FIGS. 10A and 10B, the wireless device 1010 may be travelling along the travel path 1012. Based on the travel path 1012 (e.g., trip routing information) a server may determine that the wireless device 1010 is expected to transition from network coverage area 1018a having a network stability level of 0 (i.e. all data types accessible) to network coverage area 1020 having no network connection. The wireless device 1010 may receive a notification including the predicted travel time and predicted travel duration for the wireless device 1010 to reach and travel through the network coverage area 1020. For example, the predicted travel time may be 50 seconds, and the predicted travel duration may be 15 minutes until network coverage is regained at coordinates 1012d. The wireless device 1010 may currently be accessing both high-quality video and mapping application information prior to reaching network coverage area 1020. The wireless device 1010 may determine, based on the current and most recent data access history, that the wireless device 1010 is likely to access both high-quality video and mapping application data. However, since only 50 seconds remain before losing network connectivity, downloading high-quality video may result in insufficient downloading of mapping application data. Thus, the wireless device 1010 may prioritize downloading the mapping application data first within the given timeframe to ensure continuous use of the mapping application. Prioritization of preload data type or types and preload data amounts may include fully downloading a preload data amount of one preload data type before downloading a preload data amount of a less prioritized data type.

In some embodiments, the notification received by the wireless device from the server may include multiple predicted travel times and predicted travel durations corresponding to multiple upcoming network coverage areas. For example, the notification may indicate that the wireless device will be travelling through network coverage areas having progressively more unstable network stability levels. For example, as described with reference to FIGS. 9A and 9B, a wireless device 902 may be travelling through network coverage areas 916, 914, 912, 910, and 908 as defined by coordinates 904e-904h. The wireless device 902 may determine what types of data to preload and data quantities to preload based on the notification that the wireless device 902 will experience progressively more unstable network stability levels. The wireless device 902 may determine a probability that a user is likely to access web-based data first, followed by high-quality video data. However, the wireless device 902 may prioritize downloading high-quality audio data while available within network coverage area 916, since web-based data may continue to be downloadable at least in subsequent network coverage area 914.

As another example in which the wireless device is notified of multiple upcoming network stability coverage areas having progressively more unstable network stability levels, the wireless device may download as much preload data as possible while in network coverage areas having more stable network stability levels. For example, the wireless device may choose to download web-based data and audio data in a network coverage area having a network stability level of 0. Downloading data types in areas of higher bandwidth and/or signal strength that may still be downloadable in upcoming network coverage areas may reduce chances for interruption of a user experience.

In block 1206, the wireless device may transmit a request for preload data amounts corresponding to one or more preload data types. The preload data amount and/or preload data type or types may be retrieved by the recipient server, or from any server in communication with the recipient server within a wireless communications network

In block 1208, the wireless device may receive the preload data amount corresponding to the preload data type or types from the server in response to transmitting the preload data request to the server. Preload data amounts for more than one preload data type may be downloaded from the wireless communications network, simultaneously, alternatively in portioned amounts, or sequentially.

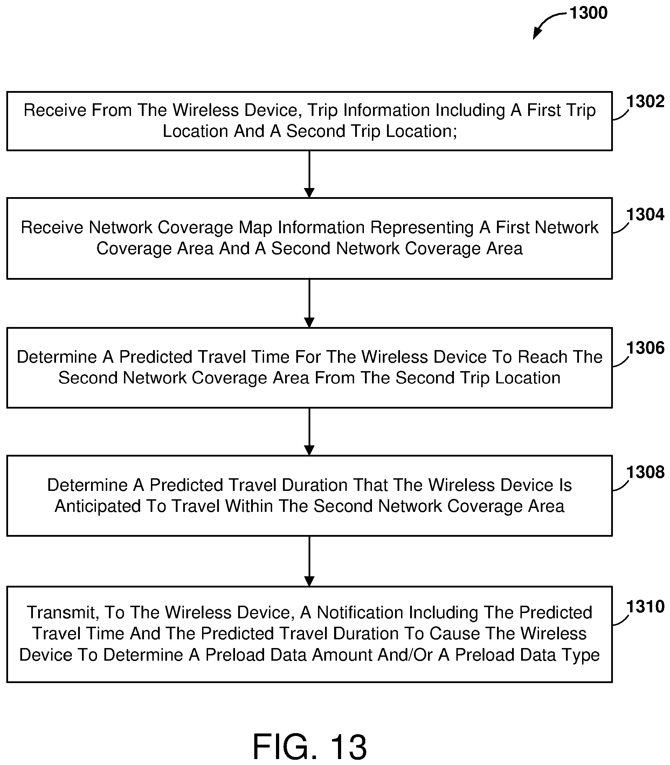

FIG. 13 is a process flow diagram illustrating a method 1300 for preloading data onto a wireless device based on predicted network status coverage according to some embodiments. With reference to FIGS. 1-13, the method 1300 may be implemented by a processor (e.g., processor 212, 216, 252, 260, 422, 522) of a server 502 that may be configured with processor-executable instructions in a non-transitory processor readable medium to perform operations of the method.

The order of operations performed in blocks 1302-1310 is merely illustrative, and the operations of blocks 1302-1310 may be performed in any order and partially simultaneously in some embodiments. In some embodiments, the method 1300 may be performed by a processor independently from, but in conjunction with, the server 502. For example, the method 1300 may be implemented as a software module executing within a processor of an SoC or in dedicated hardware within an SoC that monitors data and commands from/within the server and is configured to take actions and store data as described. For ease of reference, the various elements performing the operations of the method 1300 are referred to in the following method descriptions as a "processor."

In block 1302, the processor of a server may receive, from a wireless device, trip information including a first trip location and a second trip location. A user of a wireless device may enter a trip start point and end point in a mapping or geolocation application to map a travel route for a specific vehicle type. The trip information may include a travel route between the first trip location and a trip end location. The travel route may be a preplanned route determined by or selected by a user of a wireless device, or may be a travel route mapped by the server based on the received first trip location and second trip location.

In some embodiments, the user may not enter a first trip location and second trip location, and the first trip location and second trip location may instead be automatically determined by the wireless device while in motion. For example, the wireless device may be travelling along a highway and may intermittently be transmitting coordinates (e.g., benchmark coordinates) to the server. The server may then determine a projected travel route including speed, trajectory, and/or vehicle type based on at least two received coordinates.

In block 1304, the processor of the server may receive network coverage map information representing a first network coverage area and a second network coverage area. The second trip location may be located within the first network coverage area. The network coverage map information may be received from a network coverage database that describes network coverage areas within a wireless communications network.

In some embodiments, the network coverage map information may include carrier provided information including base station distribution. The first network stability level, the second network stability level, and any other network stability level corresponding to any other network coverage area may be based in part on base station distribution. Base station distribution may refer to the number and physical distribution of wireless devices connected to a base station within a wireless communications network.

In block 1306, the processor of the server may determine a predicted travel time for the wireless device to reach the second network coverage area from the second trip location. For example, the second trip location may be the most recently known or most recently received location of the wireless device. The predicted travel time may be a time that the wireless device is expected to enter a network coverage area (e.g., the second network coverage area) having a different network stability level than a network coverage area that the wireless device has travelled through or is travelling through (e.g., the first network coverage area).

The network coverage map information may include transition coordinates received from a plurality of wireless devices. The transition coordinates may define a location at which the wireless device observes a change in network stability levels. The transition coordinates may correspond to a transition between the first network coverage area and the second network coverage area, or any other transitions between the first network coverage area, the second network coverage area, and any other number of network coverage areas proximate to the first network coverage area and the second network coverage area. In some embodiments, the predicted travel time may be based at least in part on the transition coordinates. A wireless device may be predicted to reach the transition coordinates, and therefore a different network coverage area having a different network stability level, at the predicted travel time. The predicted travel time may be determined based on the distance between the last reported location of the wireless device (e.g., second trip location) and the transition location corresponding to an upcoming network coverage area (e.g., second network coverage area).

In block 1308, the processor of the server may determine a predicted travel duration that the wireless device is anticipated to travel within the second network coverage area. The predicted travel duration may be the time that the wireless device experiences a network stability level associated with a network coverage area. The predicted travel time may refer to the time a wireless device is predicted to travel from one edge of, or entrance to, a network coverage area, to another edge of the same network coverage area.

In some embodiments, the processor of the server may determine a speed of the wireless device based on the first trip location and the second trip location. The predicted travel time and the predicted travel duration may be based at least in part on the determined speed of the wireless device. Speed of a wireless device may be determined as described at least with reference to FIG. 11 (e.g., block 1112).

In block 1310, the processor of the server may transmit, to the wireless device, a notification including the predicted travel time and the predicted travel duration as determined in blocks 1306 and 1308. The notification including the predicted travel time and predicted travel duration may cause the wireless device to determine a preload data amount and/or preload data type or types. The preload data type or types may include high quality video, standard quality video, low quality video, audio, messaging, text, or any other form of data used in conventional wireless communications networks. Various network coverage areas may not allow for efficient download of specific data types. The notification may inform the wireless device to make a determination as to what data types the wireless device should preload before those data types become unavailable for downloading in upcoming network coverage areas.

In some embodiments, the processor of the server may receive, from the wireless device, a request for preloading data. The notification including the predicted travel time and predicted travel duration transmitted to the wireless device may cause the wireless device to determine a preload data amount and/or preload data type or types. In response to the wireless device receiving the notification, the server may receive the request for preloading data. In response to receiving the request for preloading data from the wireless device, the server may transmit the requested preloading data including data amounts for each requested preloading data type (e.g., audio, text, GUI data, high-quality video, etc). The preloading data may be transmitted to the wireless device before the wireless device enters the second network coverage area. The wireless device may receive and preload the preloading data prior to the wireless device physically entering a network coverage area that has a stability level limiting the download capabilities of the wireless device (i.e. wireless device may not be able to download certain data types without interrupting or halting a user online experience).

In some embodiments, the server may train a user behavior prediction model based on the online data access history of the wireless device. The server may receive online access history of a user of the wireless device from the wireless device. The server may train a user behavior model based on the online access history of the user. The user behavior model may output a probability that the user will access the preload data amount and/or the preload data type or types. The server may transmit the user behavior model to the wireless device to enable the wireless device to determine the preload data amount and/or the preload data type or types. The preload data amount and/or the preload data type or types may be determined using the user behavior model in conjunction with the predicted travel time and predicted travel duration.

In some embodiments, the predicted travel time and the predicted travel duration may be based at least in part on the travel route between the first trip location and a trip end location. The travel route may be mapped or otherwise projected as described in some embodiments. The predicted travel time and the predicted travel duration may be based on the travel route such that the travel route may include various distances of vehicle pathways (e.g., roads, train tracks, flight paths, etc.) that directly affect how long a vehicle containing the wireless device may be physically located within an unstable network area.

In some embodiments, the first network coverage area may have a first network stability level associated with a first wireless network type and a first signal strength. In some embodiments, the second network coverage area may have a second network stability level associated with a second wireless network type and a second signal strength. The first network stability level and second network stability level may be any network stability level between full network coverage/connectivity and no coverage, as described with reference to FIG. 6. The first wireless network type and second wireless network type may include RAT type or other characteristics describing a wireless communications network. The first signal strength and second signal strength may be any unit of measure (e.g., download rate, dBm) that describes the magnitude of a wireless communications signal and/or connection strength of a base station to a wireless device.

In some embodiments, the preload data amount and/or the preload data type or types may be based at least in part on the first network stability level and the second network stability level. The preload data amount and/or preload data type or types may be determined based on the network stability level(s) of one or more network coverage areas that a wireless device is predicted to be travelling through. The preload data amount and/or the preload data type or types may be determined based on the upcoming network stability levels as described with reference to at least FIGS. 7 and 11.

While FIG. 13 illustrates determining and transmitting the predicted travel time and predicted travel duration for based on just two trip locations and network coverage areas, the operations in blocks 1302 through 1310 may be performed for any number of trip locations within any number of network coverage areas corresponding to any number of network stability levels.

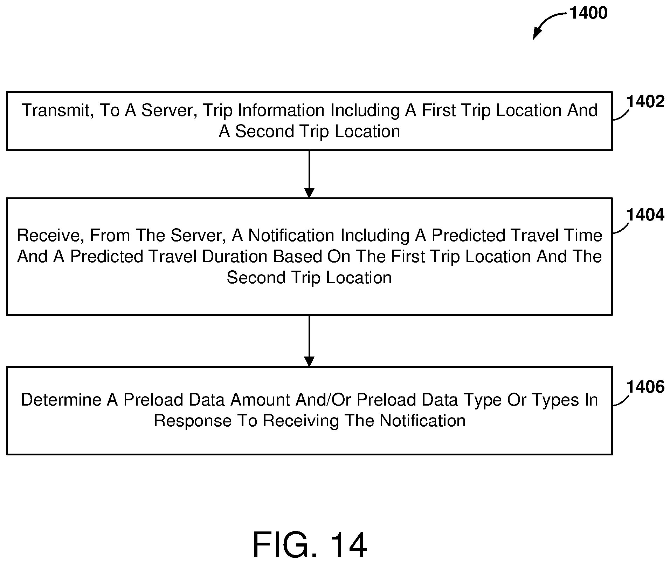

FIG. 14 is a process flow diagram illustrating a method 1400 for preloading wireless data based on a predicted network status coverage according to some embodiments. With reference to FIGS. 1-14, the method 1400 may be implemented by a processor (e.g., processor 212, 216, 252, 260, 422, 522) of a wireless device (e.g., 120a-120e, 200, 320, 120, 902, 1002, 1010) that may be configured with processor-executable instructions in a non-transitory processor readable medium to perform operations of the method.

The order of operations performed in blocks 1402-1406 is merely illustrative, and the operations of blocks 1402-1406 may be performed in any order and partially simultaneously in some embodiments. In some embodiments, the method 1400 may be performed by a processor independently from, but in conjunction with, the wireless device. For example, the method 1400 may be implemented as a software module executing within a processor of an SoC or in dedicated hardware within an SoC that monitors data and commands from/within the wireless device and is configured to take actions and store data as described. For ease of reference, the various elements performing the operations of the method 1400 are referred to in the following method descriptions as a "processor."

In block 1402, a wireless device may transmit trip information including a first trip location and a second trip location to a server (e.g., server 502). The first trip location and the second trip location may be stored by the wireless device. A user of the wireless device may enter a trip start point and end point in a mapping or geolocation application to map a travel route for a specific vehicle type. The trip information may include a travel route between the first trip location and a trip end location. The travel route may be a preplanned route determined by or selected by the user of the wireless device, or may be a travel route mapped by the server based on the received first trip location and second trip location.

In some embodiments, the user may not enter a first trip location and second trip location, and the first trip location and second trip location may instead be automatically determined by the wireless device while in motion. For example, the wireless device may be travelling along a highway and may intermittently be transmitting coordinates (e.g., benchmark coordinates) to the server. The server may then determine a projected travel route including speed, trajectory, and/or vehicle type based on at least two received coordinates.

In block 1404, the wireless device may receive, from the server, a notification including a predicted travel time and a predicted travel duration based on the first trip location and the second trip location In some embodiments, the predicted travel time and the predicted travel duration may be based at least in part on a travel route between the first trip location and a trip end location, where the second trip location is located along the travel route. The travel route can be mapped or otherwise projected as described in some embodiments. The predicted travel time and the predicted travel duration may be based on the travel route such that the travel route may include various distances of vehicle pathways (e.g., roads, train tracks, flight paths, etc.) that directly affect how long a vehicle containing the wireless device may be physically located within an unstable network area.

The server may determine a predicted travel duration that the wireless device is anticipated to travel within a network coverage area. The predicted travel duration may be the time that the wireless device experiences a network stability level associated with a network coverage area. The predicted travel time may refer to the time a wireless device is predicted to travel from one edge of, or entrance to, a network coverage area, to another edge of the same network coverage area.

The server may determine a predicted travel time for the wireless device to reach an upcoming network coverage area from the second trip location. For example, the second trip location may be the most recently known or most recently received location of the wireless device. The predicted travel time may be a time that the wireless device is expected to enter a network coverage area having a different network stability level than a network coverage area that the wireless device has travelled through or is travelling through

In some embodiments, the server may determine a speed of the wireless device based on the first trip location and the second trip location. The predicted travel time and the predicted travel duration may be based at least in part on the determined speed of the wireless device. Speed of a wireless device may be determined as described at least with reference to FIG. 11 (e.g., block 1112).

In some embodiments, the notification received by the wireless device may include a network stability level for one or more network coverage areas. The notification may include a network stability level of an upcoming network coverage area. Determining a preload data amount and/or preload data type or types may be based at least in part on the network stability level. The wireless device may be travelling through one network coverage area towards another network coverage area having a different network stability level. For example, the wireless device may be travelling through a first network coverage area towards a second network coverage area. The second trip location may be located within the first network coverage area, and the first network coverage area may have a network stability level different from the second network coverage area.

In some embodiments, the network stability levels may include a wireless network type and a signal strength. The network stability level can be any network stability level between full network coverage/connectivity and no coverage, as described with reference to FIG. 6. The wireless network type may include RAT type or other characteristics describing a wireless communications network. The signal strength may be any unit of measure (e.g., download rate, dBm) that describes the magnitude of a wireless communications signal and/or connection strength of a base station to a wireless device.

In block 1406, the wireless device may determine a preload data amount and/or preload data type or types in response to receiving the notification from the server. The preload data type or types may include high quality video, standard quality video, low quality video, audio, messaging, text, or any other form of data used in conventional wireless communications networks. Various network coverage areas may not allow for efficient download of specific data types. The notification may inform the wireless device to make a determination as to what data type or types the wireless device should preload before those data types become unavailable for downloading in upcoming network coverage areas.

In some embodiments, the preload data amount and/or the preload data type or types may be based at least in part on the predicted travel time and the predicted travel duration. For example, the type or types and amount of data to preload may be based on a time (e.g., predicted travel time) the wireless device may have stable network coverage for downloading data corresponding to a data type that may not be efficiently downloadable in an upcoming network coverage area. As another example, the type or types and amount of data to preload may be based on a time (e.g., predicted travel duration) the wireless device may experience unstable network coverage in an upcoming network coverage area in which certain data types may not be efficiently downloadable.

In some embodiments, the preload data amount and/or the one or more preload data types may be based at least in part on the one or more network stability levels received in the notification. The preload data amount and/or the one or more preload data types may be determined based on the network stability level(s) of one or more network coverage areas that a wireless device is predicted to be travelling through. The preload data amount and/or the one or more preload data types may be determined based on the upcoming network stability levels as described with reference to at least FIGS. 7, and 11.

In some embodiments, the wireless device may transmit, to the server, a request for preloading data in response to the wireless device determining the preload data amount and/or the one or more preload data types. The notification including the predicted travel time and predicted travel duration transmitted to the wireless device may cause the wireless device to determine a preload data amount and one or more preload data types. In response to transmitting the request for preloading data to the server, the wireless device may receive the requested preloading data including data amounts for each requested preloading data type (e.g., audio, text, GUI data, high-quality video, etc.) from the server. The preloading data may be received by the wireless device before the wireless device enters a network coverage area having an unstable network connection. The wireless device may receive and preload the preloading data prior to the wireless device physically entering a network coverage area that has a stability level limiting the download capabilities of the wireless device (i.e. wireless device may not be able to download certain data types without interrupting or halting a user online experience).

In some embodiments, the wireless device may transmit online access history of a user to the server. The server may train a user behavior prediction model based on the online data access history of a user of the wireless device. The user behavior model may output a probability that the user will access the preload data amount and the one or more preload data types. The preload data amount and/or the one or more preload data types may be based on the probability that the user will access the preload data amount and the one or more preload data types output by the user behavior model. The wireless device may receive the user behavior model from the server to enable the wireless device to determine the preload data amount and/or the one or more preload data types. The preload data amount and/or the one or more preload data types may be determined using the user behavior model in conjunction with the predicted travel time and predicted travel duration.

While FIG. 14 illustrates determining a preload data amount and/or one or more preload data types based on just two trip locations, the operations in blocks 1402 through 1406 may be performed for any number of trip locations involving any number of predicted travel times and predicted travel durations.

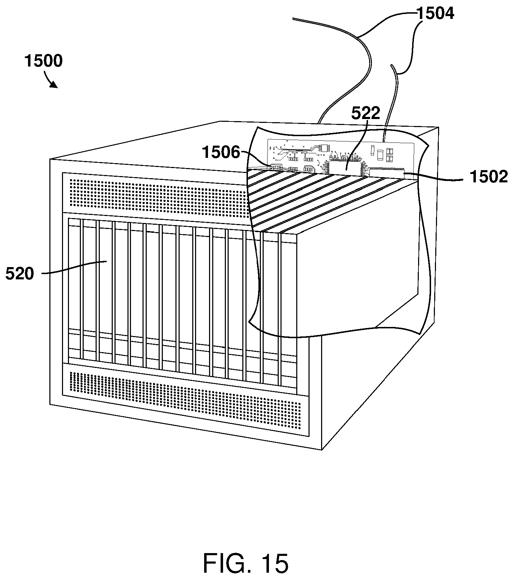

FIG. 15 is a component block diagram of an example of a network computing device 1500 that may preload data onto a wireless device based on predicted network status coverage according to some embodiments. With reference to Figures 1-15, a network computing device 1500 may function as a network element of a communication network, such as a base station. The network computing device 1500 may include a processor 522 coupled to volatile memory 1502 and a large capacity nonvolatile memory 520. The network computing device 1500 also may include a peripheral memory access device such as a floppy disc drive, compact disc (CD) or digital video disc (DVD) drive 1506 coupled to the processor 522. The network computing device 1500 also may include network access ports 1504 (or interfaces) coupled to the processor 522 for establishing data connections with a network, such as the Internet or a local area network coupled to other system computers and servers. The network computing device 1500 may include one or more antennas 1504 for sending and receiving electromagnetic radiation that may be connected to a wireless communication link. The network computing device 1500 may include additional access ports, such as USB, Firewire, Thunderbolt, and the like for coupling to peripherals, external memory, or other devices.

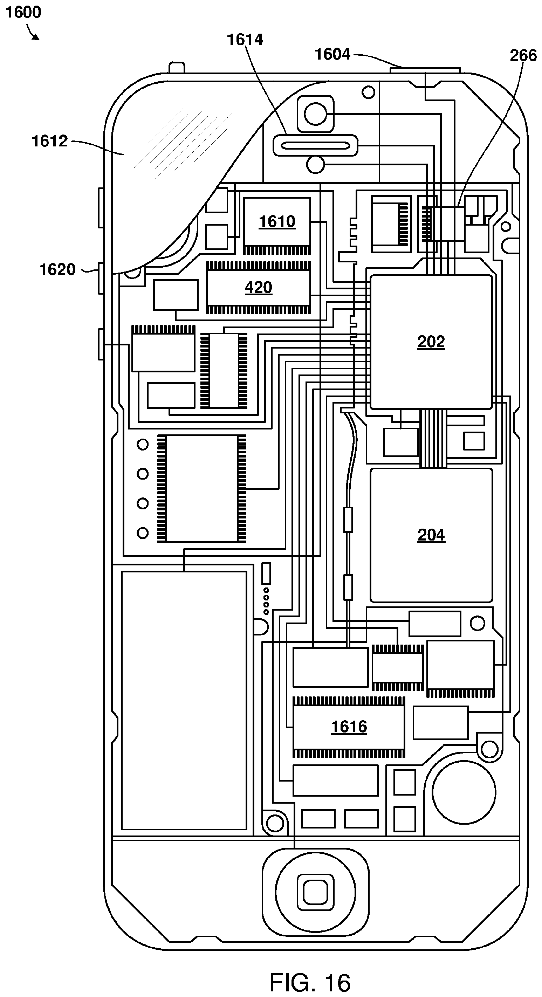

FIG. 16 is a component block diagram of an example wireless device in the form of a smartphone 1600 suitable for implementing some embodiments. With reference to FIGs. 1-16, a smartphone 1600 may include a first SOC 202 (such as a SOC-CPU) coupled to a second SOC 204 (such as a 5G capable SOC). The first and second SOCs 202, 204 may be coupled to internal memory 420, 1616, a display 1612, and to a speaker 1614. Additionally, the smartphone 1600 may include an antenna 1604 for sending and receiving electromagnetic radiation that may be connected to a wireless data link or cellular telephone transceiver 266 coupled to one or more processors in the first or second SOCs 202, 204. Smartphones 1600 typically also include menu selection buttons or rocker switches 1620 for receiving user inputs.

A typical smartphone 1600 also includes a sound encoding/decoding (CODEC) circuit 1610, which digitizes sound received from a microphone into data packets suitable for wireless transmission and decodes received sound data packets to generate analog signals that are provided to the speaker to generate sound. Also, one or more of the processors in the first and second SOCs 202, 204, wireless transceiver 266 and CODEC 1610 may include a digital signal processor (DSP) circuit (not shown separately).

The processors of the wireless network computing device 1500 and the smart phone 1600 may be any programmable microprocessor, microcomputer or multiple processor chip or chips that may be configured by processor-executable instructions to perform a variety of functions, including the functions of the various embodiments described herein. In some wireless devices, multiple processors may be provided, such as one processor within an SOC 204 dedicated to wireless communication functions and one processor within an SOC 202 dedicated to running other applications. Typically, software applications may be stored in the memory 420, 1616 before they are accessed and loaded into the processor. The processors may include internal memory sufficient to store the application software instructions.

As used in this application, the terms "component," "module," "system," and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, or a computer. By way of illustration, both an application running on a wireless device and the wireless device may be referred to as a component. One or more components may reside within a process or thread of execution and a component may be localized on one processor or core or distributed between two or more processors or cores. In addition, these components may execute from various non-transitory computer readable media having various instructions or data structures stored thereon. Components may communicate by way of local or remote processes, function or procedure calls, electronic signals, data packets, memory read/writes, and other known network, computer, processor, or process related communication methodologies.

A number of different cellular and mobile communication services and standards are available or contemplated in the future, all of which may implement and benefit from the various embodiments. Such services and standards include, such as third generation partnership project (3GPP), long term evolution (LTE) systems, third generation wireless mobile communication technology (3G), fourth generation wireless mobile communication technology (4G), fifth generation wireless mobile communication technology (5G), global system for mobile communications (GSM), universal mobile telecommunications system (UMTS), 3GSM, general packet radio service (GPRS), code division multiple access (CDMA) systems (such as cdmaOne, CDMA 1020TM), enhanced data rates for GSM evolution (EDGE), advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), and integrated digital enhanced network (iDEN). Each of these technologies involves, for example, the transmission and reception of voice, data, signaling, or content messages. It should be understood that any references to terminology or technical details related to an individual telecommunication standard or technology are for illustrative purposes only, and are not intended to limit the scope of the claims to a particular communication system or technology unless specifically recited in the claim language.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods disclosed herein may be substituted for or combined with one or more operations of the methods disclosed herein.

The foregoing method descriptions and the process flow diagrams are provided merely as illustrative examples and are not intended to require or imply that the blocks of various embodiments must be performed in the order presented. As will be appreciated by one of skill in the art the order of blocks in the foregoing embodiments may be performed in any order. Words such as "thereafter," "then," "next," etc. are not intended to limit the order of the blocks; these words are simply used to guide the reader through the description of the methods. Further, any reference to claim elements in the singular, for example, using the articles '"a:" "an" or "the" is not to be construed as limiting the element to the singular

As used herein, a phrase referring to "at least one of" a list of items refers to any combination of those items, including single members. As an example, "at least one of: a, b, or c" is intended to cover: a, b, c, a-b, a-c, b-c, and a-b-c.

The various illustrative logical blocks, modules, circuits, and algorithm blocks described in connection with the embodiments disclosed herein may be implemented as electronic hardware, computer software, or combinations of both. To clearly illustrate this interchangeability of hardware and software, various illustrative components, blocks, modules, circuits, and blocks have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of various embodiments.

The hardware and data processing apparatus used to implement the various illustrative logics, logical blocks, modules, and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination, such as a combination of a DSP and a microprocessor, a plurality of microprocessors, one or more microprocessors in conjunction with a DSP core, or any other such configuration. In some embodiments, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Embodiments of the subject matter described in this specification also may be implemented as one or more computer programs, i.e. one or more modules of computer program instructions, encoded on a computer storage media for execution by, or to control the operation of, data processing apparatus.

Computer program code or "program code" for execution on a programmable processor for carrying out operations of the various embodiments may be written in a high level programming language such as C, C++, C#, Smalltalk, Java, JavaScript, Visual Basic, a Structured Query Language (e.g., Transact-SQL), Perl, or in various other programming languages. Program code or programs stored on a computer readable storage medium as used in this application may refer to machine language code (such as object code) whose format is understandable by a processor.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, and Blu-ray disc in which disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the embodiments described in this disclosure may be readily apparent to those skilled in the art, and the generic principles defined herein may be applied to other embodiments without departing from the scope of the claims. The invention is defined by the appended claims.

## Claims

1. A method performed by a processor (522) of a server (502) for supporting preloading data onto a wireless device (320) based on predicted network coverage status, comprising:
receiving, from the wireless device (320), trip information including a first trip location of the wireless device (320) and a second trip location of the wireless device (320);
receiving network coverage map information representing a first network coverage area (908) of a network and a second network coverage area (1020) of the network, wherein the second trip location is located within the first network coverage area (908);
predicting a travel time for the wireless device (320) to reach the second network coverage area (1020) from the second trip location based at least in part on a speed of the wireless device (320);
predicting a travel duration that the wireless device (320) is anticipated to travel within the second network coverage area (1020) based at least in part on the speed of the wireless device (320); and
transmitting, to the wireless device (320), a notification including the predicted travel time and the predicted travel duration configured to enable the wireless device (320) to determine a preload data amount or a preload data type.

2. The method of claim 1, wherein:
the first network coverage area has a first network stability level associated with a first wireless network type and a first signal strength;
the second network coverage area has a second network stability level associated with a second wireless network type and a second signal strength; and
the preload data amount or preload data type are based at least in part on the first network stability level and the second network stability level.

3. The method of claim 2, wherein the network coverage map information includes carrier provided information including base station distribution, wherein the first network stability level and the second network stability level are based in part on the base station distribution.

4. The method of claim 1, wherein the network coverage map information includes transition coordinates received from a plurality of wireless devices, wherein the transition coordinates correspond to a network stability transition between the first network coverage area and the second network coverage area, and wherein the predicted travel time is based at least in part on the transition coordinates.

5. The method of claim 1, wherein the preload data type includes high quality video, standard quality video, low quality video, audio, messaging, or text.

6. The method of claim 1, further comprising:
determining the speed of the wireless device based on the first trip location and the second trip location and an elapsed time for the wireless device to travel from the first trip location to the second trip location, wherein predicting the travel time and predicting the travel duration are based at least in part on the speed of the wireless device.

7. The method of claim 1, wherein the trip information further includes a travel route between the first trip location and a trip end location, wherein predicting the travel time and predicting the travel duration are based at least in part on the travel route.

8. The method of claim 1, further comprising:
receiving, from the wireless device, a request for preloading data; and
transmitting the requested preloading data to the wireless device before the wireless device enters the second network coverage area.

9. The method of claim 1, further comprising:
receiving, from the wireless device, online access history of a user of the wireless device;
training a user behavior model based on the online access history that will enable the wireless device to determine the preload data amount or preload data type wherein the user behavior model outputs a probability that the user will access the preload data amount or preload data type; and
transmitting the user behavior model to the wireless device.

10. A server (502), comprising;
A processor (522) configured with processor-executable instructions (506) to:
receive, from a wireless device (320), trip information including a first trip location of the wireless device (320) and a second trip location of the wireless device (320);
receive network coverage map information representing a first network coverage area (908) of a network and a second network coverage area (1020) of the network, wherein the second trip location is located within the first network coverage area (908);
predict a travel time for the wireless device (320) to reach the second network coverage area (1020) from the second trip location based at least in part on a speed of the wireless device (320);
predict a travel duration that the wireless device (320) is anticipated to travel within the second network coverage area (1020) based at least in part on the speed of the wireless device (320); and
transmit, to the wireless device (320), a notification including the predicted travel time and the predicted travel duration configured to enable the wireless device (320) to determine a preload data amount or preload data type.

11. A method performed by a processor (422) of a wireless device (320) for preloading data based on a predicted network coverage status of a network having a first network coverage area (908) and a second network coverage area (1020), comprising:
transmitting, to a server (502), trip information including a first trip location of the wireless device (320) and a second trip location of the wireless device (320), wherein the second trip location is located within the first network coverage area (908);
receiving, from the server (502), a notification including a predicted travel time for the wireless device (320) to reach a second network coverage area from the second trip location based at least in part on a speed of the wireless device (320),; and
receiving, from the server (502), a predicted travel duration that the wireless device (320) is anticipated to travel within the second network coverage area (1020) based at least in part on the speed of the wireless device (320); and
determining a preload data amount or preload data type in response to receiving the notification.

12. The method of claim 11, further comprising:
transmitting, to the server, a request for preloading data in response to the wireless device determining the preload data amount or preload data type; and
receiving, from the server, the requested preloading data before the wireless device enters a network coverage area having an unstable network connection.

13. The method of claim 11, further comprising:
transmitting, to the server, online access history of a user of the wireless device;
receiving, from the server, a user behavior model;
using the user behavior model to determine a probability that the user will access the preload data amount or preload data type; and
determining the preload data amount or preload data type based on the probability that the user will access the preload data amount or the preload data type output by the user behavior model.

14. A wireless device (320), comprising a processor (422) configured with processor-executable instructions (406) to:
transmit, to a server (502), trip information including a first trip location of the wireless device (320) and a second trip location of the wireless device (320), wherein the second trip location is located within a first network coverage area (908) of a network;
receive, from the server (502), a notification including a predicted travel time for the wireless device (320) to reach a second network coverage area of the network from the second trip location based at least in part on a speed of the wireless device (320; and
receive, from the server (502), a predicted travel duration that the wireless device (320) is anticipated to travel within the second network coverage area (1020) based at least in part on the speed of the wireless device (320); and
determine a preload data amount or preload data type in response to receiving the notification.

15. A computer program comprising instructions which, when the program is executed by a computer, cause the computer to carry out the method of any of claims 1-9.

## Patentansprüche

1. Verfahren, durchgeführt von einem Prozessor (522) eines Servers (502) zum Unterstützen des Vorladens von Daten auf ein drahtloses Gerät (320) auf der Basis eines vorhergesagten Netzabdeckungsstatus, das Folgendes beinhaltet:
Empfangen, von dem drahtlosen Gerät (320), von Reiseinformationen, die einen ersten Reiseort des drahtlosen Geräts (320) und einen zweiten Reiseort des drahtlosen Geräts (320) enthalten;
Empfangen von Netzabdeckungskarteninformationen, die einen ersten Netzabdeckungsbereich (908) eines Netzwerks und einen zweiten Netzabdeckungsbereich (1020) des Netzwerks darstellen, wobei sich der zweite Reiseort innerhalb des ersten Netzabdeckungsbereichs (908) befindet;
Vorhersagen einer Reisezeit für das drahtlose Gerät (320) zum Erreichen des zweiten Netzabdeckungsbereichs (1020) vom zweiten Reiseort zumindest teilweise auf der Basis einer Geschwindigkeit des drahtlosen Geräts (320);
Vorhersagen einer voraussichtlichen Reisedauer des drahtlosen Geräts (320) innerhalb des zweiten Netzabdeckungsbereichs (1020) zumindest teilweise auf der Basis der Geschwindigkeit des drahtlosen Geräts (320); und
Senden, zu dem drahtlosen Gerät (320), einer Benachrichtigung, die die vorhergesagte Reisezeit und die vorhergesagte Reisedauer enthält, konfiguriert zum Befähigen des drahtlosen Geräts (320) zum Bestimmen einer Vorladedatenmenge oder eines Vorladedatentyps.

2. Verfahren nach Anspruch 1, wobei:
der erste Netzabdeckungsbereich einen mit einem ersten drahtlosen Netzwerktyp und einer ersten Signalstärke assoziierten ersten Netzstabilitätsgrad hat;
der zweite Netzabdeckungsbereich einen mit einem zweiten drahtlosen Netzwerktyp und einer zweiten Signalstärke assoziierten zweiten Netzstabilitätsgrad hat; und
die Vorladedatenmenge oder der Vorladedatentyp zumindest teilweise auf dem ersten Netzstabilitätsgrad und dem zweiten Netzstabilitätsgrad basiert.

3. Verfahren nach Anspruch 2, wobei die Netzabdeckungskarteninformationen vom Netzbetreiber bereitgestellte Informationen einschließlich der Basisstationsverteilung umfassen, wobei der erste Netzstabilitätsgrad und der zweite Netzstabilitätsgrad teilweise auf der Basisstationsverteilung basieren.

4. Verfahren nach Anspruch 1, wobei die Netzabdeckungskarteninformationen von mehreren drahtlosen Geräten empfangene Übergangskoordinaten umfassen, wobei die Übergangskoordinaten einem Netzstabilitätsübergang zwischen dem ersten Netzabdeckungsbereich und dem zweiten Netzabdeckungsbereich entsprechen, und wobei die vorhergesagte Reisezeit zumindest teilweise auf den Übergangskoordinaten basiert.

5. Verfahren nach Anspruch 1, wobei der Vorladedatentyp Videos in hoher Qualität, Videos in Standardqualität, Videos in niedriger Qualität, Audio, Nachrichten oder Text umfasst.

6. Verfahren nach Anspruch 1, das ferner Folgendes beinhaltet:
Bestimmen der Geschwindigkeit des drahtlosen Geräts auf der Basis des ersten Reiseorts und des zweiten Reiseorts und einer verstrichenen Zeit für die Reise des drahtlosen Geräts vom ersten Reiseort zum zweiten Reiseort, wobei das Vorhersagen der Reisezeit und das Vorhersagen der Reisedauer zumindest teilweise auf der Geschwindigkeit des drahtlosen Geräts basieren.

7. Verfahren nach Anspruch 1, wobei die Reiseinformationen ferner eine Reiseroute zwischen dem ersten Reiseort und einem Reiseendort umfassen, wobei die Vorhersage der Reisezeit und die Vorhersage der Reisedauer zumindest teilweise auf der Reiseroute basieren.

8. Verfahren nach Anspruch 1, das ferner Folgendes beinhaltet:
Empfangen, von dem drahtlosen Gerät, einer Anforderung zum Vorladen von Daten; und
Senden der angeforderten Vorladedaten zu dem drahtlosen Gerät, bevor das drahtlose Gerät in den zweiten Netzabdeckungsbereich eintritt.

9. Verfahren nach Anspruch 1, das ferner Folgendes beinhaltet:
Empfangen, von dem drahtlosen Gerät, eines Online-Zugriffsverlaufs eines Benutzers des drahtlosen Geräts;
Trainieren eines Benutzerverhaltensmodells auf der Basis des Online-Zugriffsverlaufs, das das drahtlose Gerät befähigt, die Vorladedatenmenge oder den Vorladedatentyp zu bestimmen, wobei das Benutzerverhaltensmodell eine Wahrscheinlichkeit ausgibt, dass der Benutzer auf die Vorladedatenmenge oder den Vorladedatentyp zugreift; und
Senden des Benutzerverhaltensmodells zu dem drahtlosen Gerät.

10. Server (502), der Folgendes umfasst:
einen Prozessor (522), konfiguriert mit prozessorausführbaren Befehlen (506) zum:
Empfangen, von einem drahtlosen Gerät (320), von Reiseinformationen, die einen ersten Reiseort des drahtlosen Geräts (320) und einen zweiten Reiseort des drahtlosen Geräts (320) enthalten;
Empfangen von Netzabdeckungskarteninformationen, die einen ersten Netzabdeckungsbereich (908) eines Netzwerks und einen zweiten Netzabdeckungsbereich (1020) des Netzwerks darstellen, wobei sich der zweite Reiseort innerhalb des ersten Netzabdeckungsbereichs (908) befindet;
Vorhersagen einer Reisezeit für das drahtlose Gerät (320) zum Erreichen des zweiten Netzabdeckungsbereichs (1020) vom zweiten Reiseort zumindest teilweise auf der Basis einer Geschwindigkeit des drahtlosen Geräts (320);
Vorhersagen einer voraussichtlichen Reisedauer des drahtlosen Geräts (320) innerhalb des zweiten Netzabdeckungsbereichs (1020) zumindest teilweise auf der Basis der Geschwindigkeit des drahtlosen Geräts (320); und
Senden, zu dem drahtlosen Gerät (320), einer Benachrichtigung, die die vorhergesagte Reisezeit und die vorhergesagte Reisedauer enthält, konfiguriert zum Befähigen des drahtlosen Geräts (320) zum Bestimmen einer Vorladedatenmenge oder eines Vorladedatentyps.

11. Verfahren, durchgeführt von einem Prozessor (422) eines drahtlosen Geräts (320) zum Vorladen von Daten auf der Basis eines vorhergesagten Netzabdeckungsstatus eines Netzwerks mit einem ersten Netzabdeckungsbereich (908) und einem zweiten Netzwerkabdeckungsbereich (1020), das Folgendes beinhaltet:
Senden, zu einem Server (502), von Reiseinformationen, die einen ersten Reiseort des drahtlosen Geräts (320) und einen zweiten Reiseort des drahtlosen Geräts (320) enthalten, wobei sich der zweite Reiseort innerhalb des ersten Netzabdeckungsbereichs (908) befindet;
Empfangen, von dem Server (502), einer Benachrichtigung, die eine vorhergesagte Reisezeit für das drahtlose Gerät (320) zum Erreichen eines zweiten Netzabdeckungsbereichs vom zweiten Reiseort enthält, die zumindest teilweise auf einer Geschwindigkeit des drahtlosen Geräts (320) basiert; und
Empfangen, von dem Server (502), einer vorhergesagten voraussichtlichen Reisedauer des drahtlosen Geräts (320) innerhalb des zweiten Netzabdeckungsbereichs (1020) zumindest teilweise auf der Basis der Geschwindigkeit des drahtlosen Geräts (320); und
Bestimmen einer Vorladedatenmenge oder eines Vorladedatentyps als Reaktion auf den Empfang der Benachrichtigung.

12. Verfahren nach Anspruch 11, das ferner Folgendes beinhaltet:
Senden, zu dem Server, einer Anforderung zum Vorladen von Daten als Reaktion darauf, dass das drahtlose Gerät die Vorladedatenmenge oder den Vorladedatentyp bestimmt; und
Empfangen, von dem Server, der angeforderten Vorladedaten, bevor das drahtlose Gerät in einen Netzabdeckungsbereich mit einer instabilen Netzwerkverbindung eintritt.

13. Verfahren nach Anspruch 11, das ferner Folgendes beinhaltet:
Senden, zu dem Server, eines Online-Zugriffsverlaufs eines Benutzers des drahtlosen Geräts;
Empfangen, von dem Server, eines Benutzerverhaltensmodells;
Benutzen des Benutzerverhaltensmodells zum Bestimmen einer Wahrscheinlichkeit, dass der Benutzer auf die Vorladedatenmenge oder den Vorladedatentyp zugreift; und
Bestimmen der Vorladedatenmenge oder des Vorladedatentyps auf der Basis der Wahrscheinlichkeit, dass der Benutzer auf die/den vom Benutzerverhaltensmodell ausgegebene(n) Vorladedatenmenge oder Vorladedatentyp zugreift.

14. Drahtloses Gerät (320), das einen Prozessor (422) umfasst, der mit prozessorausführbaren Befehlen (406) konfiguriert ist zum:
Senden, zu einem Server (502), von Reiseinformationen, die einen ersten Reiseort des drahtlosen Geräts (320) und einen zweiten Reiseort des drahtlosen Geräts (320) enthalten, wobei sich der zweite Reiseort innerhalb des ersten Netzabdeckungsbereichs (908) befindet;
Empfangen, von dem Server (502), einer Benachrichtigung, die eine vorhergesagte Reisezeit für das drahtlose Gerät (320) zum Erreichen eines zweiten Netzabdeckungsbereichs vom zweiten Reiseort enthält, die zumindest teilweise auf einer Geschwindigkeit des drahtlosen Geräts (320) basiert; und
Empfangen, von dem Server (502), einer vorhergesagten voraussichtlichen Reisedauer des drahtlosen Geräts (320) innerhalb des zweiten Netzabdeckungsbereichs (1020) zumindest teilweise auf der Basis der Geschwindigkeit des drahtlosen Geräts (320); und
Bestimmen einer Vorladedatenmenge oder eines Vorladedatentyps als Reaktion auf den Empfang der Benachrichtigung.

15. Computerprogramm, das Befehle umfasst, die bei Ausführung des Programms durch einen Computer den Computer zum Durchführen des Verfahrens nach einem der Ansprüche 1-9 veranlassen.

## Revendications

1. Procédé réalisé par un processeur (522) d'un serveur (502) pour prendre en charge le préchargement de données sur un dispositif sans fil (320) sur la base d'un état de couverture de réseau prédit, comprenant :
la réception, à partir du dispositif sans fil (320), d'informations de trajet comportant un premier emplacement de trajet du dispositif sans fil (320) et un second emplacement de trajet du dispositif sans fil (320) ;
la réception d'informations de carte de couverture de réseau représentant une première zone de couverture de réseau (908) d'un réseau et une seconde zone de couverture de réseau (1020) du réseau, dans lequel le second emplacement de trajet est situé dans la première zone de couverture de réseau (908) ;
la prédiction d'un temps de déplacement du dispositif sans fil (320) pour atteindre la seconde zone de couverture de réseau (1020) à partir du second emplacement de trajet, sur la base au moins en partie d'une vitesse du dispositif sans fil (320) ;
la prédiction d'une durée de déplacement durant laquelle le dispositif sans fil (320) est censé se déplacer dans la seconde zone de couverture de réseau (1020) sur la base au moins en partie de la vitesse du dispositif sans fil (320) ; et
la transmission, au dispositif sans fil (320), d'une notification comportant le temps de déplacement prédit et la durée de déplacement prédite configurée pour permettre au dispositif sans fil (320) de déterminer une quantité de données de préchargement ou un type de données de préchargement.

2. Procédé selon la revendication 1, dans lequel :
la première zone de couverture de réseau a un premier niveau de stabilité de réseau associé à un premier type de réseau sans fil et à une première intensité de signal,
la seconde zone de couverture du réseau a un second niveau de stabilité de réseau associé à un second type de réseau sans fil et à une seconde intensité de signal ; et
la quantité de données de préchargement ou le type de données de préchargement sont basés, au moins en partie, sur le premier niveau de stabilité de réseau et le second niveau de stabilité de réseau.

3. Procédé selon la revendication 2, dans lequel les informations de carte de couverture de réseau comportent des informations fournies par l'opérateur comportant une répartition de stations de base, dans lequel le premier niveau de stabilité de réseau et le second niveau de stabilité de réseau sont basés en partie sur la répartition de stations de base.

4. Procédé selon la revendication 1, dans lequel les informations de carte de couverture de réseau comportent des coordonnées de transition reçues à partir d'une pluralité de dispositifs sans fil, dans lequel les coordonnées de transition correspondent à une transition de stabilité de réseau entre la première zone de couverture de réseau et la seconde zone de couverture de réseau, et dans lequel le temps de déplacement prédit est basé au moins en partie sur les coordonnées de transition.

5. Procédé selon la revendication 1, dans lequel le type de données de préchargement comporte des données de vidéo de haute qualité, vidéo de qualité standard, vidéo de basse qualité, audio, messagerie ou texte.

6. Procédé selon la revendication 1, comprenant en outre :
la détermination de la vitesse du dispositif sans fil sur la base du premier emplacement de trajet et du second emplacement de trajet et d'un temps écoulé pour que le dispositif sans fil se déplace du premier emplacement de trajet au second emplacement de trajet, dans lequel la prédiction du temps de déplacement et la prédiction de la durée de déplacement sont basées au moins en partie sur la vitesse du dispositif sans fil.

7. Procédé selon la revendication 1, dans lequel les informations de trajet comportent en outre un itinéraire de déplacement entre le premier emplacement de trajet et un emplacement de fin de trajet, dans lequel la prédiction du temps de déplacement et la prédiction de la durée de déplacement sont basées au moins en partie sur l'itinéraire de déplacement.

8. Procédé selon la revendication 1, comprenant en outre :
la réception, à partir du dispositif sans fil, d'une demande de préchargement de données ; et
la transmission des données de préchargement demandées au dispositif sans fil avant que celui-ci n'entre dans la seconde zone de couverture de réseau.

9. Procédé selon la revendication 1, comprenant en outre :
la réception, à partir du dispositif sans fil, d'un historique d'accès en ligne d'un utilisateur du dispositif sans fil ;
l'entraînement d'un modèle de comportement d'utilisateur basé sur l'historique d'accès en ligne qui permettra au dispositif sans fil de déterminer la quantité de données de préchargement ou le type de données de préchargement, dans lequel le modèle de comportement d'utilisateur délivre en sortie une probabilité que l'utilisateur va accéder à la quantité de données de préchargement ou au type de données de préchargement ; et
la transmission du modèle de comportement d'utilisateur au dispositif sans fil.

10. Serveur (502), comprenant :
un processeur (522) configuré avec des instructions exécutables par processeur (506) pour :
recevoir, à partir d'un dispositif sans fil (320), des informations de trajet comportant un premier emplacement de trajet du dispositif sans fil (320) et un second emplacement de trajet du dispositif sans fil (320) ;
recevoir des informations de carte de couverture de réseau représentant une première zone de couverture de réseau (908) d'un réseau et une seconde zone de couverture de réseau (1020) du réseau, dans lequel le second emplacement de trajet est situé dans la première zone de couverture de réseau (908) ;
prédire un temps de déplacement du dispositif sans fil (320) pour atteindre la seconde zone de couverture de réseau (1020) à partir du second emplacement de trajet sur la base au moins en partie d'une vitesse du dispositif sans fil (320) ;
prédire une durée de déplacement durant laquelle le dispositif sans fil (320) est censé se déplacer dans la seconde zone de couverture de réseau (1020) sur la base au moins en partie de la vitesse du dispositif sans fil (320) ; et
transmettre, au dispositif sans fil (320), une notification comportant le temps de déplacement prédit et la durée de déplacement prédite configurée pour permettre au dispositif sans fil (320) de déterminer une quantité de données de préchargement ou un type de données de préchargement.

11. Procédé réalisé par un processeur (422) d'un dispositif sans fil (320) pour précharger des données sur la base d'un état de couverture de réseau prédit d'un réseau ayant une première zone de couverture de réseau (908) et une seconde zone de couverture de réseau (1020), comprenant :
la transmission, à un serveur (502), d'informations de trajet comportant un premier emplacement de trajet du dispositif sans fil (320) et un second emplacement de trajet du dispositif sans fil (320), dans lequel le second emplacement de trajet est situé dans la première zone de couverture de réseau (908) ;
la réception, à partir du serveur (502), d'une notification comportant un temps de déplacement prédit du dispositif sans fil (320) pour atteindre une seconde zone de couverture de réseau à partir du second emplacement de trajet sur la base au moins en partie d'une vitesse du dispositif sans fil (320), ; et
la réception, à partir du serveur (502), d'une durée de déplacement prédite pendant laquelle le dispositif sans fil (320) est censé se déplacer dans la seconde zone de couverture de réseau (1020) sur la base au moins en partie de la vitesse du dispositif sans fil (320) ; et
la détermination d'une quantité de données de préchargement ou d'un type de données de préchargement en réponse à la réception de la notification.

12. Procédé selon la revendication 11, comprenant en outre :
la transmission, au serveur, d'une demande de préchargement de données en réponse à la détermination par le dispositif sans fil de la quantité de données de préchargement ou du type de données de préchargement ; et
la réception, à partir du serveur, des données de préchargement demandées avant que le dispositif sans fil n'entre dans une zone de couverture de réseau ayant une connexion de réseau instable.

13. Procédé selon la revendication 11, comprenant en outre :
la transmission, au serveur, d'un historique d'accès en ligne d'un utilisateur du dispositif sans fil ;
la réception, à partir du serveur, d'un modèle de comportement d'utilisateur,
l'utilisation du modèle de comportement d'utilisateur pour déterminer la probabilité que l'utilisateur va accéder à la quantité de données de préchargement ou au type de données de préchargement ; et
la détermination de la quantité de données de préchargement ou du type de données de préchargement sur la base de la probabilité que l'utilisateur va accéder à la quantité de données de préchargement ou au type de données de préchargement délivrés par le modèle de comportement d'utilisateur.

14. Dispositif sans fil (320), comprenant un processeur (422) configuré avec des instructions exécutables par processeur (406) pour :
transmettre, à un serveur (502), des informations de trajet comportant un premier emplacement de trajet du dispositif sans fil (320) et un second emplacement de trajet du dispositif sans fil (320), dans lequel le second emplacement de trajet est situé dans une première zone de couverture de réseau (908) d'un réseau ;
recevoir, à partir du serveur (502), une notification comportant un temps de déplacement prédit du dispositif sans fil (320) pour atteindre une seconde zone de couverture de réseau du réseau à partir du second emplacement de trajet sur la base au moins en partie d'une vitesse du dispositif sans fil (320) ; et
recevoir, à partir du serveur (502), une durée de déplacement prédite pendant laquelle le dispositif sans fil (320) est censé se déplacer dans la seconde zone de couverture de réseau (1020) sur la base au moins en partie de la vitesse du dispositif sans fil (320) ; et
déterminer une quantité de données de préchargement ou un type de données de préchargement en réponse à la réception de la notification.

15. Programme d'ordinateur comprenant des instructions qui, à leur exécution par un ordinateur, amènent l'ordinateur à mettre en œuvre le procédé selon l'une quelconque des revendications 1 à 9.
